# FASCICULE DE BREVET EUROPEEN

(11) **EP 3 951 205 B1**
(45) Date de publication et mention de la délivrance du brevet: **29.03.2023**
(21) Numéro de dépôt: 21189206.2
(22) Date de dépôt: 02.08.2021
(51) Int. Cl.: F16D 25/0638, F16D 25/10, F16D 21/06

(54) **ORGANE DE RETENUE D'UN ANNEAU D'ARRET AXIAL POUR EMBRAYAGE**
RÜCKHALTEORGAN EINES AXIALEN SICHERUNGSRINGS FÜR EINE KUPPLUNG
MEMBER FOR RETAINING AN AXIAL ABUTMENT RING FOR A CLUTCH

(30) Priorité: 06.08.2020 FR 2008324
(43) Date de publication de la demande: 09.02.2022
(73) Titulaire: VALEO EMBRAYAGES, 80009 Amiens (FR)
(72) Inventeur: CAUMARTIN, Laurent, 80000 Amiens (FR); BOUGARD, Jean Francois, 80000 Amiens (FR); CORNET, Vincent, 80000 Amiens (FR); THIBAUT, Francois, 80000 Amiens (FR); DOLE, Arnaud, 80000 Amiens (FR); VUAROQUEAUX, Guillaume, 80000 Amiens (FR)
(74) Mandataire: Valeo Powertrain Systems

(56) Documents cités:
- FR-A1- 3 082 572
- US-A1- 2004 168 878
- US-B2- 10 520 041

## Description

La présente invention concerne un embrayage de type multidisque et également un mécanisme d'embrayage pour une transmission de véhicule, par exemple de type hybride pour laquelle une machine électrique tournante est disposée dans la chaine de transmission de couple.

De manière connue, chaque mécanisme d'embrayage, mobile en rotation autour d'un axe, comprend un moyen d'entrée de couple destiné à être couplés à un vilebrequin, un arbre de sortie de couple, au moins un embrayage humide de type multidisques, ainsi qu'au moins un actionneur comportant un piston mobile axialement, qui permet de générer un effort pour configurer l'embrayage multidisque correspondant dans une configuration embrayée ou débrayée. Chaque embrayage multidisque comporte des flasques liés en rotation à un porte-disque intérieur formant par exemple le moyen d'entrée de couple, et des disques de friction liés en rotation à un porte-disques extérieur. Le porte-disques intérieur peut comprendre une extension axiale solidaire au moyen d'entrée de couple et agencée pour recevoir les flasques, par exemple sur son diamètre extérieur.

Il est connu d'arrêter le déplacement axial des plateaux par rapport aux disques de friction lorsqu'ils sont pressés par le piston mobile, grâce à des moyens de réaction issus de matière par exemple avec le porte-disques d'entrée, exigeant une épaisseur et des dimensions importantes. Dans ce cas, l'axe d'actionnement du piston mobile est dirigé vers le porte-disques d'entrée.

Parfois, l'axe d'actionnement du piston mobile est dirigé dans la direction opposée au porte-disques d'entrée. Dans ce cas, le moyen de réaction peut être un anneau d'arrêt rapporté, de forme ouverte. Le document US10520041 décrit un tel embrayage, dont le disque d'extrémité est arrêté par un anneau d'arrêt monté dans l'extension axiale du porte-disques intérieur supportant ledit disque d'extrémité. L'anneau d'arrêt peut être inséré sur le porte-disques depuis une gorge du porte-disques ou un logement du disque d'extrémité.

Cependant, un tel anneau d'arrêt présente des inconvénients. Sous l'effet de la rotation de l'embrayage, notamment à hautes vitesses, l'anneau d'arrêt de forme ouverte peut s'expanser et sortir de sa gorge ou de son logement, avec un risque de mise en défaut de l'embrayage lors de son fonctionnement sur véhicule.

L'invention a pour objet de répondre au moins en partie aux problèmes précédents et de conduire en outre à d'autres avantages. L'invention vise notamment à améliorer de manière simple et efficace la conception existante, tout en garantissant la compacité axiale et radiale de l'embrayage.

Dans ce but, l'invention propose, selon un premier aspect, un embrayage de type multidisques, comprenant :
- un porte-disques d'embrayage,
- un premier groupe de disques supporté en partie par le porte-disques d'embrayage et comportant un disque d'extrémité,
- un premier anneau d'arrêt axial inséré en partie dans une première gorge formée dans le porte-disques d'embrayage, et
- un organe de retenue du premier anneau d'arrêt axial, ledit disque d'extrémité comprenant un logement à l'intérieur duquel est logé une partie de l'organe de retenue du premier anneau d'arrêt axial,
l'organe de retenue étant situé en partie entre le premier anneau d'arrêt axial et le logement du disque d'extrémité.

On empêche le premier anneau d'arrêt axial, sous l'effet de la rotation de l'embrayage, de s'expanser et de s'échapper de la gorge du porte-disques, en insérant un organe de retenue dans le logement du disque d'extrémité, l'organe de retenue étant alors fixe par rapport au disque d'extrémité du premier groupe.

L'organe de retenue est agencé, selon l'invention, pour assurer le maintien du premier anneau d'arrêt axial à l'intérieur de la gorge du porte-disques, et en particulier à l'intérieur du logement du disque d'extrémité, pour des hautes vitesses de rotations de l'embrayage allant par exemple au-delà de 550 tr/ min. Le montage et le démontage du premier anneau d'arrêt sont simplifiés, d'une manière optimisée et compacte.

L'invention propose, selon un mode particulier de réalisation du premier aspect, un embrayage de type multidisques, comprenant :
- un porte-disques d'embrayage,
- un premier groupe de disques supporté en partie par le porte-disques d'embrayage et comportant un disque d'extrémité, ledit disque d'extrémité comprenant un logement annulaire à l'intérieur duquel est logé un premier anneau d'arrêt axial du disque d'extrémité, ledit premier anneau d'arrêt axial étant inséré en partie dans une première gorge formée dans le porte-disques d'embrayage, et
- un organe de retenue du premier anneau d'arrêt axial, situé en partie entre le premier anneau d'arrêt axial et le logement annulaire du disque d'extrémité.

On empêche le premier anneau d'arrêt axial, sous l'effet de la rotation de l'embrayage, de s'expanser et s'échapper du logement du disque d'extrémité, en insérant un organe de retenue dans le logement annulaire logeant déjà l'anneau d'arrêt axial, de sorte à combler l'espace libre restant après le montage du premier anneau d'arrêt.

L'organe de retenue est agencé, selon l'invention, pour assurer le maintien du premier anneau d'arrêt axial à l'intérieur de la gorge du porte-disques, pour des hautes vitesses de rotations de l'embrayage allant par exemple au-delà de 550 tr/ min. Le montage et le démontage du premier anneau d'arrêt sont simplifiés, d'une manière optimisée et compacte.

L'invention propose, selon un autre mode particulier de réalisation du premier aspect, un embrayage de type multidisques, comprenant :
- un porte-disques d'embrayage,
- un premier groupe de disques supporté en partie par le porte-disques d'embrayage et comportant un disque d'extrémité,
- un premier anneau d'arrêt axial inséré en partie dans une première gorge formée dans le porte-disques d'embrayage, et
- un organe de retenue du premier anneau d'arrêt axial,
ledit disque d'extrémité comprenant un logement à l'intérieur duquel est logé uniquement l'organe de retenue du premier anneau d'arrêt axial, l'organe de retenue recouvrant le premier anneau d'arrêt axial et étant logé en partie dans le logement du disque d'extrémité.

On empêche le premier anneau d'arrêt axial, sous l'effet de la rotation de l'embrayage, de s'expanser et s'échapper de la gorge du porte-disques, en insérant un organe de retenue dans un logement du disque d'extrémité, adapté à cet effet. Un tel logement est adapté à recevoir uniquement l'organe de retenue, l'intérieur du logement étant exempte d'anneau d'arrêt axial. Les dimensions du logement sont réduites, le retrait de matière dans le disque d'extrémité est également réduit.

L'organe de retenue est agencé, selon l'invention, pour assurer le maintien du premier anneau d'arrêt axial à l'intérieur de la gorge du porte-disques, et en particulier à l'intérieur du logement du disque d'extrémité, pour des hautes vitesses de rotations de l'embrayage allant par exemple au-delà de 550 tr/ min.

Le montage et le démontage du premier anneau d'arrêt sont simplifiés, d'une manière optimisée et compacte.

Un tel embrayage conforme au premier aspect de l'invention, nommé aussi « premier embrayage », peut présenter l'une ou l'autre des caractéristiques décrites ci-dessous combinées entre elles ou prises indépendamment les unes des autres :
- Le logement du disque d'extrémité peut être circonférentiellement continue, notamment de forme annulaire. Le logement peut alors comprendre un contour ouvert, par exemple débouchant radialement vers l'intérieur ;
- En variante, le logement du disque d'extrémité peut être circonférentiellement discontinue, notamment formé d'au moins un évidemment ou d'un retrait partiel de matière localisé. Le logement peut alors comprendre un contour fermé, par exemple de forme circulaire, rectangulaire ou incurvée ;
- Ledit premier embrayage peut être de type humide. Au sens de la présente demande, un embrayage humide est un embrayage qui est adapté pour fonctionner dans un bain d'huile ou brouillard d'huile ;
- Le porte-disques d'embrayage, dit porte-disques du premier embrayage, peut comprendre une portion cannelée agencée pour entrainer en rotation une partie du premier groupe de disques, la première gorge étant formée sur le diamètre extérieur de la portion cannelée. En particulier, la première gorge peut être ouverte radialement vers l'extérieur ;
- De préférence, le porte-disques du premier embrayage peut être un porte-disques intérieur du premier embrayage ;
- Le porte-disques du premier embrayage peut être un porte-disques d'entrée de couple du premier embrayage.
- En variante, le porte-disques du premier embrayage peut être un porte-disques de sortie de couple ;
- Ladite portion cannelée du premier embrayage peut comprendre un profil particulier en cannelure définie par une alternance de crête et de creux. Les crêtes ou sommets de ladite portion cannelée sont adaptées pour entrainer en rotation une partie du premier groupe de disques. Les creux de ladite portion cannelée peuvent former la première gorge ;
- La première gorge peut s'étendre circonférentiellement de manière discontinue autour de l'axe X ;
- La forme du premier anneau d'arrêt axial peut être ouverte, telle que par exemple un anneau élastique de type fendu ;
- L'organe de retenue peut s'étendre circonférentiellement de manière continue ou discontinue autour de l'axe X ;
- L'organe de retenue peut comprendre un rebord annulaire logé radialement entre le disque d'extrémité et le premier anneau d'arrêt axial. Un tel rebord annulaire vient ainsi chapeauter ou entourer ledit anneau, afin de retenir radialement ce premier anneau d'arrêt axial. Le rebord annulaire peut être disposée radialement à l'extérieur dudit anneau d'arrêt axial ;
- Le rebord annulaire de l'organe de retenue peut être logé à l'intérieur du logement du disque d'extrémité ;
- Le rebord annulaire peut être obtenu par forgeage et usinage, ou par tout autre procédé connu de l'homme du métier ;
- Le rebord annulaire peut être discontinu. A l'inverse, le rebord annulaire peut être continu tout autour de l'axe X, de sorte à venir combler tout l'espace libre disponible du logement du disque d'extrémité sur 360 degrés ;
- De manière avantageuse, l'organe de retenue peut comprendre une partie centrale annulaire et une partie périphérique annulaire adaptée pour retenir le premier anneau d'arrêt axial. L'organe de retenue peut comprendre en outre une pluralité de bras de liaison reliant la partie centrale annulaire à la partie périphérique annulaire.
- La partie centrale annulaire peut être circonférentiellement discontinue ;
- La partie périphérique annulaire peut être circonférentiellement discontinue ;
- La partie centrale annulaire peut être disposée radialement à l'intérieur de la partie périphérique annulaire ;
- La partie périphérique annulaire peut former en partie ledit rebord annulaire. En variante, la partie centrale annulaire peut former en partie ledit rebord annulaire. Selon le cas choisi, la partie périphérique annulaire ou la partie centrale annulaire de l'organe de retenue est alors insérée en partie dans la première gorge formée dans le porte-disques d'embrayage. Dès lors, l'autre partie qui elle est radialement opposée (partie centrale ou partie périphérique) peut être fixe axialement ;
- Les bras de liaison peuvent être formés par découpage et pliage, ou par tout autre procédé connu de l'homme du métier ;
- Les bras de liaison peuvent être insérés dans des encoches formées sur l'extrémité libre de la portion cannelée. La largeur des bras de liaison peut être sensiblement égale à la largeur des encoches correspondantes du porte-disques d'embrayage ;
- Chacun des bras de liaison présente deux congés de raccordement respectivement reliés à la partie périphérique annulaire et la partie centrale annulaire. En particulier, l'un des congés de raccordement d'un bras de liaison peut être en regard de l'encoche de la portion cannelée correspondante ;
- L'organe de retenue, notamment l'une au moins des parties périphérique et/ou centrale annulaire, peut comprendre des pattes de retenue. Elles sont destinées à être logées à l'intérieur du logement du disque d'extrémité. Le nombre de pattes de retenue peut être compris entre deux et quarante, de préférence entre dix et trente pattes de retenue ;
- Les pattes de retenue peuvent logées radialement entre le disque d'extrémité et le premier anneau d'arrêt axial ;

L'invention a également pour objet, selon un deuxième aspect, un embrayage selon l'une quelconque des caractéristiques précédentes, dans lequel l'organe de retenue est maintenu axialement par un composant dudit embrayage.

L'avantage, selon le deuxième aspect, est d'assurer une retenue au niveau du premier embrayage qui soit proche de l'organe de retenue. Ce composant d'embrayage peut être choisi par exemple parmi le porte-disques d'embrayage ou le disque d'extrémité du premier groupe de disques, limitant le nombre de pièces et garantissant une compacité optimale.

Ce deuxième aspect de l'invention peut présenter l'une ou l'autre des caractéristiques décrites ci-dessous combinées entre elles ou prises indépendamment les unes des autres :
- De manière avantageuse, la partie périphérique annulaire ou la partie centrale annulaire de l'organe de retenue est maintenue axialement par un composant dudit premier embrayage ;
- L'organe de retenue peut être déformer élastiquement pour être maintenu axialement par rapport audit composant du premier embrayage. Sa rigidité et sa raideur fournissent un effort de serrage sur le composant du premier embrayage qui, après sa déformation élastique imposée au montage, maintient l'organe de retenue par relâchement élastique. Pour ce faire, on peut élargir élastiquement l'organe de retenue, lors de son montage, à l'aide d'un outillage de montage, par exemple une pince ;
- Selon un premier cas, le disque d'extrémité du premier groupe peut comprendre une cavité annulaire à l'intérieur de laquelle est logée la partie périphérique annulaire de l'organe de retenu, la cavité annulaire étant disposée radialement au-delà du logement annulaire contenant en partie le premier anneau d'arrêt axial et la partie centrale annulaire de l'organe de retenu. L'avantage de cette partie périphérique annulaire est d'être retenue axialement par ledit disque d'extrémité ;
- Dans ce cas particulier, la largeur de la cavité annulaire peut être adaptée à celle de la partie périphérique annulaire ;
- Selon un deuxième cas, les appuis axiaux de l'organe de retenue peuvent être disposés de part et d'autre du disque d'extrémité du premier groupe. Les parties périphérique et centrale annulaires de l'organe de retenue peuvent être en appui sur le disque d'extrémité et disposées axialement en appui de part et d'autre du disque d'extrémité ;
- Par exemple, la partie périphérique annulaire de l'organe de retenue peut être située en partie dans le logement annulaire du disque d'extrémité. Dès lors, la partie centrale annulaire peut être en appui sur une face latérale du disque d'extrémité opposée à celle du logement annulaire. De cette manière, les parties périphérique et centrale annulaires sont en appuies de part et d'autre du disque d'extrémité, de sorte à maintenir fixe l'organe de retenue par rapport au disque d'extrémité du premier groupe ;
- En particulier, l'organe de retenue peut s'étendre radialement en dessous du disque d'extrémité, en traversant l'extrémité libre de la portion cannelée au travers d'encoches ;
- Selon un troisième cas, la partie centrale annulaire de l'organe de retenue peut être en appui ou en butée sur la portion cannelée du porte-disques d'embrayage, par exemple sur l'extrémité libre de la portion cannelée ;

L'invention a également pour objet, selon un troisième aspect, un mécanisme d'embrayage, comprenant un premier embrayage selon le premier aspect et un deuxième embrayage de type multidisques, ledit deuxième embrayage comprenant :
- un porte-disques d'embrayage,
- un deuxième groupe de disques supporté en partie par le porte-disques d'embrayage et comportant un disque d'extrémité, et
- un deuxième anneau d'arrêt axial du disque d'extrémité, inséré en partie dans une deuxième gorge formée dans le porte-disques d'embrayage, dans lequel l'organe de retenue du premier anneau d'arrêt axial est retenu axialement par le deuxième anneau d'arrêt axial.

L'avantage d'une telle configuration, selon l'invention, est d'assurer, sous l'effet de la rotation, la retenue de l'organe de retenue simple simple au niveau du deuxième embrayage, par le deuxième anneau d'arrêt axial.

Selon le troisième aspect, le montage du deuxième anneau d'arrêt axial vient arrêter axialement l'organe de retenue, de sorte à l'empêcher de s'échapper hors du logement du disque d'extrémité, d'une manière optimisée et compacte.

De manière avantageuse, l'organe de retenue du premier anneau d'arrêt axial est intercalé entre le deuxième anneau d'arrêt axial et le disque d'extrémité du deuxième groupe de disques, de manière à être maintenu axialement entre le deuxième anneau d'arrêt axial et le disque d'extrémité du deuxième groupe. Dès lors, les appuis axiaux sont formés, au niveau du deuxième embrayage, de part et d'autre de l'organe de retenue.

Ce troisième aspect de l'invention peut présenter l'une ou l'autre des caractéristiques décrites ci-dessous combinées entre elles ou prises indépendamment les unes des autres :
- Avantageusement, le mécanisme d'embrayage peut être du type triple embrayage ou embrayages hybrides, destinés à équiper par exemple des véhicules à boîte de vitesses robotisée ;
- Le premier embrayage peut être disposé radialement au-delà du deuxième embrayage. Les portes-disques du premier embrayage et du deuxième embrayage peuvent être disposés radialement l'un au-dessus de l'autre ;
- De préférence, le porte-disques du deuxième embrayage peut être un porte-disques extérieur du deuxième embrayage. En variante, le porte-disques du deuxième embrayage peut être un porte-disques intérieur du deuxième embrayage ;
- Le porte-disques du deuxième embrayage peut être un porte-disques d'entrée de couple du deuxième embrayage.

En variante, le porte-disques du deuxième embrayage peut être un porte-disques de sortie de couple ;
- L'organe de retenue peut s'étendre radialement entre le premier embrayage et le deuxième embrayage ;
- De préférence, la partie centrale annulaire peut être localisée au niveau du premier embrayage ;
- En complément, la partie périphérique annulaire peut être localisée au niveau du deuxième embrayage ;
- Les bras de liaison peuvent s'étendre axialement entre les portes-disques des premier et deuxième embrayages ;
- Le porte-disques du deuxième embrayage peut comprendre une portion cannelée agencée pour entrainer en rotation une partie du deuxième groupe de disques, la deuxième gorge étant formée sur la portion cannelée ;
- De préférence, la deuxième gorge peut être formée sur le diamètre intérieur de ladite portion cannelée ;
- La deuxième gorge peut être ouverte radialement vers l'intérieur. L'avantage est pour le deuxième anneau d'arrêt axial de rester logé fixement dans la deuxième gorge, sous l'effet centrifuge de l'embrayage, sans besoin de retenue ;
- En particulier, le porte-disques du deuxième embrayage peut être un porte-disques extérieur ;
- En variante, la deuxième gorge peut être formée sur le diamètre extérieur de ladite portion cannelée ;
   - La deuxième gorge peut être ouverte radialement vers l'extérieur ;
   - En particulier, le porte-disques du deuxième embrayage peut être un porte-disques intérieur ;
- Le porte-disques du deuxième embrayage peut être un porte-disques d'entrée de couple ;

En variante, le porte-disques du deuxième embrayage peut être un porte-disques de sortie de couple ;
- Le porte-disques du premier embrayage et le porte-disques du deuxième embrayage peuvent former un porte-disques d'entrée de couple commun, rapportés l'un sur l'autre, reliés ensemble par exemple par une soudure ;
- En variante, le porte-disques du premier embrayage et le porte-disques du deuxième embrayage peuvent former un porte-disques d'entrée de couple commun, réalisé d'un seul tenant ;
- De manière avantageuse, la portion cannelée du premier embrayage peut comprendre un profil complémentaire avec la portion cannelée du deuxième embrayage ;
- Ledit disque d'extrémité du deuxième groupe de disques peut comporter un logement annulaire à l'intérieur duquel est logé en partie l'organe de retenue, afin de limiter davantage l'encombrement axial du deuxième embrayage ;
- Le deuxième anneau d'arrêt axial peut être de forme ouverte, par exemple un deuxième anneau élastique de type fendu ;
- Ladite portion cannelée peut comprendre un profil particulier en cannelure définie par une alternance de crête et de creux. Les crêtes de la portion cannelée sont adaptées pour entrainer en rotation une partie du deuxième groupe de disques ;
- La deuxième gorge peut s'étendre circonférentiellement de manière discontinue autour de l'axe X. En particulier, les creux de ladite portion cannelée peuvent former la deuxième gorge ;
- Ledit deuxième embrayage peut être de type humide.

L'invention a également pour objet, selon un quatrième aspect, un procédé d'assemblage d'un premier embrayage, pouvant reprendre tout ou partie des caractéristiques mentionnées précédemment, comportant au moins les étapes suivantes :
a) fournir, pour un premier embrayage :
   - un premier porte-disques, d'axe X de révolution et comprenant une première gorge,
   - un premier groupe de disques dont un disque d'extrémité comprend un logement annulaire ou discontinue,
   - un premier anneau d'arrêt axial, et un organe de retenue ;
b) empiler de manière alternée les disques du premier groupe supportés en partie par le premier porte-disques, en finissant par le disque d'extrémité supporté par le premier porte-disques ;
c) d) insérer le premier anneau d'arrêt axial à l'intérieur du logement du disque d'extrémité du premier groupe, avant de le loger en partie dans la première gorge du premier porte-disques ; puis insérer une partie de l'organe de retenue dans l'espace libre restant à l'intérieur du logement du disque d'extrémité du premier groupe;
   ou
c') d') loger en partie le premier anneau d'arrêt axial dans la première gorge du premier porte-disques ; puis insérer une partie de l'organe de retenue à l'intérieur du logement du disque d'extrémité du premier groupe ;

L'invention concerne en particulier, selon un mode particulier de réalisation du quatrième aspect, un procédé d'assemblage d'un premier embrayage, pouvant reprendre tout ou partie des caractéristiques mentionnées précédemment, comportant au moins les étapes suivantes :
a) fournir, pour un premier embrayage :
   - un premier porte-disques, d'axe X de révolution et comprenant une première gorge,
   - un premier groupe de disques dont un disque d'extrémité comprend un logement annulaire,
   - un premier anneau d'arrêt axial, et un organe de retenue ;
b) empiler de manière alternée les disques du premier groupe supportés en partie par le premier porte-disques, en finissant par le disque d'extrémité supporté par le premier porte-disques ;
c) insérer le premier anneau d'arrêt axial à l'intérieur du logement annulaire du disque d'extrémité du premier groupe, avant de le loger en partie dans la première gorge du premier porte-disques ;
d) insérer une partie de l'organe de retenue dans l'espace libre restant à l'intérieur du logement annulaire du disque d'extrémité du premier groupe ;

Selon ce procédé, les étapes de montage de l'embrayage assurent de manière simple la retenue de l'anneau d'arrêt axial. Le montage de l'organe de retenue comble l'espace resté vide après le montage dudit premier anneau d'arrêt axial dans le logement annulaire. Le démontage est possible de manière simple, en retirant l'organe de retenue du logement annulaire.

Le logement annulaire du disque d'extrémité est ici disposé en regard de la gorge du porte-disques. L'accès à la gorge du porte-disques se fait dès lors par l'entrée du logement annulaire, pour le montage et le démontage dudit anneau d'arrêt axial. Selon les étapes b) et c), l'anneau d'arrêt axial est disposé conjointement dans la gorge et le logement annulaire.

L'invention concerne en particulier, selon un autre mode particulier de réalisation du quatrième aspect, un procédé d'assemblage d'un premier embrayage, reprenant tout ou partie des caractéristiques mentionnées précédemment, comportant au moins les étapes suivantes :
a) fournir, pour un premier embrayage :
   - un premier porte-disques, d'axe X de révolution et comprenant une première gorge,
   - un premier groupe de disques dont un disque d'extrémité comprend un logement,
   - un premier anneau d'arrêt axial, et un organe de retenue ;
b) empiler de manière alternée les disques du premier groupe supportés en partie par le premier porte-disques, en finissant par le disque d'extrémité supporté par le premier porte-disques ;
c') insérer le premier anneau d'arrêt axial dans la première gorge du premier porte-disques ;
d') insérer une partie de l'organe de retenue à l'intérieur du logement du disque d'extrémité du premier groupe ;

Selon ce procédé, les étapes de montage de l'embrayage assurent de manière simple la retenue de l'anneau d'arrêt axial. Le premier anneau d'arrêt axial est monté dans la gorge puis maintenue par l'organe de retenue, lui-même monté et maintenue dans le logement du disque d'extrémité adapté à cet effet. Le démontage est possible de manière simple, en retirant l'organe de retenue dudit logement.

Le logement du disque d'extrémité est ici décalé axialement de la gorge du porte-disques. L'accès à la gorge du porte-disques se fait indépendamment du logement annulaire, pour le montage et le démontage dudit anneau d'arrêt axial. Selon ces étapes, l'anneau d'arrêt axial est monté dans la gorge et le logement annulaire reçoit uniquement l'organe de retenue.

L'invention a également pour objet, selon un cinquième aspect, un procédé d'assemblage d'un mécanisme d'embrayage, reprenant les quatre étapes précédentes pour l'assemblage du premier embrayage E1, et comportant en outre les étapes suivantes :
e) fournir, pour un deuxième embrayage :
   - un deuxième porte-disques, d'axe X de révolution et comprenant une deuxième gorge,
   - un deuxième groupe de disques dont un disque d'extrémité ;
f) empiler de manière alternée, pour un deuxième embrayage, les disques du deuxième groupe supportés en partie par le deuxième porte-disques, en finissant par le disque d'extrémité supporté par le deuxième porte-disques ;
g) mettre en appui axial une autre partie de l'organe de retenue sur le disque d'extrémité du deuxième groupe ;
h) mettre en appui axial le deuxième anneau d'arrêt axial sur le disque d'extrémité du deuxième groupe, puis loger en partie le deuxième anneau d'arrêt axial dans la deuxième gorge du deuxième porte-disques ;

Selon ce procédé, les étapes de montage du deuxième embrayage assurent de manière simple la retenue de l'organe de retenue du premier anneau d'arrêt axial. Le montage du deuxième anneau d'arrêt axial, après l'étape g) de mise en appui de l'organe de retenue, assure le maintien axial de l'organe de retenue au niveau du deuxième embrayage.

Le maintien est davantage optimal en intercalant l'organe de retenue entre le disque d'extrémité du deuxième groupe et le deuxième anneau d'arrêt axial. Le démontage du premier anneau d'arrêt axial est aussi possible de manière simple, en retirant successivement : le deuxième anneau d'arrêt axial, puis l'organe de retenue du logement annulaire.

L'invention propose également, selon un sixième aspect, un embrayage de type multidisques, comprenant :
- un porte-disques d'embrayage, et
- un premier groupe de disques supporté en partie par le porte-disques d'embrayage et comportant un disque d'extrémité, ledit disque d'extrémité comprenant un logement annulaire, dont la périphérie externe du logement est délimitée par un diamètre extérieur radialement variable et à l'intérieur duquel est logé un premier anneau d'arrêt axial du disque d'extrémité, ledit premier anneau d'arrêt axial étant inséré en partie dans une première gorge formée dans le porte-disques d'embrayage,
dans lequel le premier anneau d'arrêt axial comprend des moyens de retenue formés sur les extrémités dudit anneau, les moyens de retenue coopérant en partie avec le logement suivant la variation ΔD du diamètre extérieur de la périphérie externe.

Selon le sixième aspect, les moyens de retenue coopèrent avec la périphérie externe radialement variable du logement annulaire. On empêche ainsi le premier anneau d'arrêt axial de s'expanser sous hautes vitesses de rotations de l'embrayage, allant par exemple au-delà de 550 tr/ min. L'anneau d'arrêt axial est maintenu à l'intérieur du logement annulaire du disque d'extrémité. Le logement annulaire présente un profil non circulaire, obtenu par usinage, dont le diamètre extérieur est variable.

Après montage, l'espace libre disponible entre le premier anneau d'arrêt axial et le logement annulaire est réduit au minimum. Les moyens de retenue coopèrent avec le plus petit diamètre extérieur du logement, en d'autres termes, avec la zone de plus petit diamètre extérieur du logement annulaire.

Le sixième aspect de l'invention peut présenter l'une ou l'autre des caractéristiques décrites ci-dessous combinées entre elles ou prises indépendamment les unes des autres :
- Le logement annulaire peut être délimité par un diamètre extérieur radialement variable, ledit logement annulaire comprenant une zone de plus grand diamètre Da et une zone de plus petit diamètre Db. Le diamètre extérieur du logement annulaire peut s'étendre radialement, selon une variation ΔD, entre le plus grand diamètre, dit « diamètre maximal dA » du logement annulaire, et le plus petit diamètre, dit « diamètre minimal Da » du logement annulaire ;
- De manière avantageuse, la forme de la zone de plus petit diamètre Db est complémentaire à celle du premier anneau d'arrêt axial, plus précisément à celle des moyens de retenue ;
- Le premier anneau d'arrêt axial peut comprendre des moyens de retenue coopérant en partie avec le logement suivant la variation ΔD du diamètre extérieur de la périphérie externe. De préférence, les moyens de retenue peuvent coopérer avec la zone de plus petit diamètre Db du logement annulaire ;
- Les moyens de retenue peuvent faire saillis radialement à l'extérieur du premier anneau d'arrêt axial ;
- Par exemple, le premier anneau d'arrêt axial peut être de forme ouverte. Dès lors, au moins l'une de ces extrémités peut comprendre un lobe d'arrêt formant un moyen de retenue du premier anneau d'arrêt axial. Le premier anneau d'arrêt axial peut comprendre deux lobes d'arrêt formant lesdits moyens de retenue du premier anneau d'arrêt axial ;
- Alternativement, les moyens de retenue peuvent être formés par des vagues circonférentielles du premier anneau d'arrêt axial, angulairement régulièrement espacées les unes des autres, et elles coopèrent avec le diamètre extérieur du logement annulaire. Alternativement, les moyens de retenue peuvent être des brins recourbés du premier anneau d'arrêt axial ;
- Chaque lobe d'arrêt peut faire saillie radialement en direction du diamètre extérieur du logement annulaire ;
- Chaque lobe d'arrêt peut comprendre un orifice dans lequel on peut loger l'extrémité d'un outillage de montage, tel que par exemple une pince. On facilite ainsi l'écartement élastique des deux extrémités du premier anneau d'arrêt axial, lors de son montage dans le logement, avant de le relâcher pour qu'il se loge dans la première gorge du premier porte-disques ;

L'invention propose également, selon un septième aspect, un procédé d'assemblage du premier embrayage selon le sixième aspect, comportant au moins les étapes suivantes :
a) fournir : - un premier porte-disques comprenant une première gorge,
   - un premier groupe de disques dont un disque d'extrémité comprend un logement annulaire délimité par un diamètre extérieur radialement variable, ledit logement annulaire comprenant une zone de plus grand diamètre et une zone de plus petit diamètre,
   - un premier anneau d'arrêt axial,
b) insérer le premier groupe de disques sur le premier porte-disques en finissant par un disque d'extrémité lié en rotation avec le premier porte-disques,
c) élargir élastiquement le premier anneau d'arrêt axial puis l'insérer à l'intérieur du logement annulaire dans la zone de plus grand diamètre,
d) relâcher élastiquement le premier anneau d'arrêt axial pour qu'il se loge dans la première gorge du premier porte-disques, et
e) faire pivoter le premier anneau d'arrêt axial pour le positionner dans la zone de plus petit diamètre du logement annulaire.

Selon le septième aspect, les étapes de montage, par rotation du premier anneau d'arrêt par l'opérateur, assurent de manière simple la retenue de ce dernier, pour des hautes vitesses de rotations de l'embrayage allant par exemple au-delà de 550 tr/ min. Les étapes de montage et de démontage sont réduites et simplifiées. La rotation de l'anneau d'arrêt axial permet de faire coopérer les moyens de retenue avec la zone du logement annulaire de plus petit diamètre.

Selon les étapes c) et d), on vient loger l'anneau d'arrêt axial dans la gorge du porte-disques. On écarte l'anneau d'arrêt à l'aide d'un outillage de montage logé dans les orifices des lobes d'arrêt, tel que par exemple une pince ;

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées :
- [Fig. 1] est une vue en coupe axiale d'un mécanisme d'embrayage selon un premier mode de réalisation de l'invention ;
- [Fig. 2] est une vue en perspective éclatée du mécanisme d'embrayage, selon le premier mode illustré à la [Fig. 1] ;
- [Fig. 3] est une autre vue en perspective éclatée du mécanisme d'embrayage, selon le premier mode illustré à la [Fig. 1] ;
- [Fig. 4] est une autre vue détaillée en perspective du mécanisme d'embrayage, selon le premier mode illustré à la [Fig. 1];
- [Fig. 5] est une vue en coupe axiale d'un premier embrayage, selon un deuxième mode de réalisation de l'invention ;
- [Fig. 6] est une autre vue en coupe axiale d'un premier embrayage, selon un troisième mode de réalisation de l'invention ;
- [Fig. 7] est une autre vue en coupe axiale d'un premier embrayage, selon un quatrième mode de réalisation de l'invention ;
- [Fig. 8] est une vue en coupe axiale du mécanisme d'embrayage, selon un cinquième mode de réalisation de l'invention ;
- [Fig. 9] est une vue en coupe axiale du mécanisme d'embrayage, selon un sixième mode de réalisation de l'invention ;
- [Fig. 10] est une vue détaillée du mécanisme d'embrayage, selon le sixième mode de réalisation illustré à la [Fig. 9];
- [Fig. 11] est une vue détaillée de l'organe de retenue, selon le sixième mode de réalisation illustré à la [Fig. 9];
- [Fig. 12] est une vue en perspective de l'organe de retenue, selon le sixième mode de réalisation illustré à la [Fig. 9];

Par « véhicule », on entend les véhicules automobiles, qui comprennent non seulement les véhicules passagers, mais aussi les véhicules industriels, ce qui comprend notamment les poids lourds, les véhicules de transport en commun ou les véhicules agricoles, mais également tout engin de transport permettant de faire passer d'un point à un autre un être vivant et/ou un objet.

Dans la suite de la description et des revendications, on utilisera à titre non limitatif et afin d'en faciliter la compréhension, les termes "avant" ou "arrière" selon la direction par rapport à une orientation axiale déterminée par l'axe X principal de rotation de la transmission du véhicule automobile et les termes "intérieur / interne" ou "extérieur / externe" par rapport à l'axe X et suivant une orientation radiale, orthogonale à ladite orientation axiale.

Sauf indication contraire,
« axialement » signifie « parallèlement à l'axe X de rotation du couvercle d'équilibrage ou du double embrayage » ;
« radialement » signifie « selon un axe transversal coupant l'axe de rotation du double embrayage humide » ;
« angulairement » ou « circonférentiellement » signifient « autour de l'axe X de rotation du mécanisme d'embrayage ».

L'épaisseur est ici mesurée selon l'axe X de rotation. Sauf indication contraire, les verbes « comporter », « présenter » ou « comprendre » doivent être interprétés de manière large, c'est-à-dire non limitative.

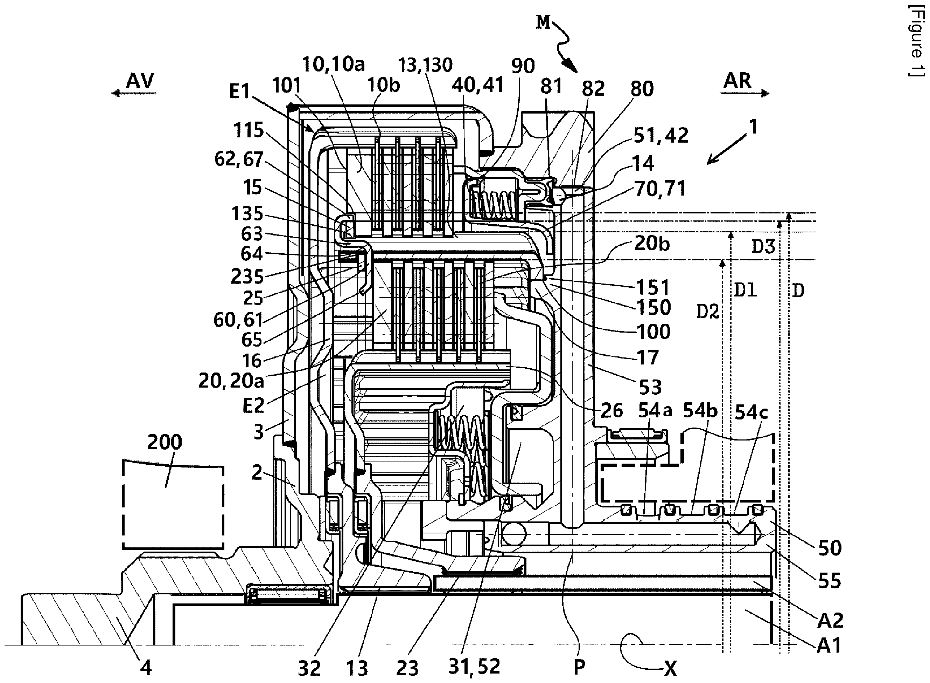

On a représenté sur les FIGURES 1 à 4 un premier mode de réalisation d'un mécanisme 1 d'embrayage, ici à double embrayage pour une transmission de véhicule, qui est représenté au sein d'une chaine de transmission de couple de véhicule automobile, par l'intermédiaire d'un carter de boite de vitesses équipé de deux arbres A1, A2 menés de sortie de couple. Dans une variante non illustrée, le mécanisme 1 d'embrayage peut être un simple embrayage.

Le mécanisme 1 comprend un premier embrayage E1 et un deuxième embrayage E2 respectivement de type multidisques, commandés pour accoupler sélectivement un moteur thermique et une machine électrique M tournante à un premier arbre A1 mené et à un deuxième arbre A2 mené. Le couple issu du moteur thermique et du moteur électrique peut alors être transmis aux arbres coaxiaux A1, A2 de boite de vitesses en fonction de la fermeture de l'un ou de l'autre du premier embrayage E1 ou du deuxième embrayage E2.

Le premier arbre A1 mené est entraîné en rotation lorsque ledit premier embrayage E1 est fermé et le deuxième arbre A2 mené est entraîné en rotation lorsque ledit deuxième embrayage E2 est fermé. Le premier et deuxième embrayages E1, E2 sont disposés radialement l'un au-dessus de l'autre selon l'axe X.

Dans les exemples illustrés, le premier embrayage E1 est disposé radialement au-dessus du deuxième embrayage E2. En variante non illustrée, le premier embrayage E1 peut être disposé axialement à côté du deuxième embrayage E2.

Le mécanisme 1 comporte autour de son axe X de rotation, au moins un élément d'entrée 2 de couple qui est lié en rotation à un arbre menant (non représenté). L'élément d'entrée 2 est situé à l'avant du mécanisme 1 à double embrayage. L'élément d'entrée 2 présente globalement une forme en « L » et comporte une partie d'orientation radiale formée par un voile 3 d'entrée de couple et une partie d'orientation axiale formée par un moyeu 4 d'entrée de couple.

Le voile 3 et le moyeu 4 sont solidaires, fixés ensemble par soudage. Le moyeu 4 d'entrée de couple est guidé en rotation à l'intérieur d'un boitier 200 fixe par rapport à la chaine de transmission de couple.

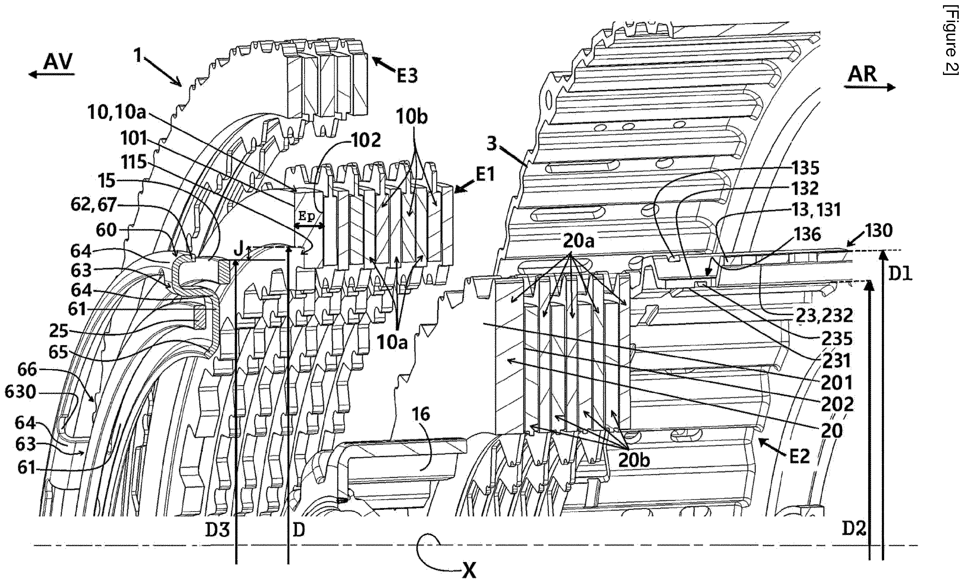

Le mécanisme 1 peut être un embrayage hybride, destiné à équiper des transmissions automatique, robotisée, hybride et/ou électrique d'un véhicule automobile. Comme illustré à titre d'exemple sur les FIGURES 2 et 8 à 9, le mécanisme 1 peut être un triple embrayage E1, E2, E3, comprenant en outre un troisième embrayage E3, qui peut être couplé en rotation avec le voile d'entrée 3 et les embrayages E1, E2. Le moyeu 4 d'entrée de couple est par exemple lié en rotation par l'intermédiaire de cannelures formées à la sortie d'un dispositif d'amortissement (tel qu'un double volant amortisseur, etc.) dont l'entrée est liée, par l'intermédiaire notamment d'un volant moteur, à l'arbre menant formé par un vilebrequin qu'entraîne en rotation un moteur thermique équipant le véhicule.

Le mécanisme 1 d'embrayage est de type humide, adapté pour fonctionner dans un bain d'huile et/ou brouillard d'huile. Le mécanisme 1 est commandé hydrauliquement par l'intermédiaire d'un fluide sous pression, généralement de l'huile.

Pour commander sélectivement le changement d'état du premier embrayage E1 et du deuxième embrayage E2, un dispositif de commande du mécanisme 1 gère l'alimentation en huile sous pression au sein de chambres de commande séparées. Le dispositif de commande est généralement intégré au carter de boite de vitesses.

Le dispositif de commande est supporté et raccordé à un moyeu central 50. Le moyeu central 50 est apte à transmettre le couple en provenance de deux sources distinctes, thermique et électrique.

Le moyeu central 50 comporte des canaux 54a et 54c d'alimentation d'huile sous pression tel que représentés sur la FIGURE 1, afin que le moyeu central 50 puisse alimenter en huile le premier embrayage E1 et le deuxième embrayage E2.

Comme cela est connu dans le fonctionnement d'un embrayage E1, E2 humide, une chambre d'équilibrage 31, 41 est associée à chaque chambre de commande 32, 42. Généralement, la chambre d'équilibrage est disposée axialement à côté de la cavité annulaire faisant office de chambre de commande.

Dans les exemples illustrés, le moyeu central 50 d'alimentation d'huile comprend :
- une portion cylindrique 55 d'axe X,
- un flasque 53 s'étendant radialement depuis la portion cylindrique 55,
- une première cavité 51 annulaire disposée sur le côté du flasque et agencée pour recevoir un premier piston 14 d'actionnement du premier embrayage E1,
- une deuxième cavité 52 annulaire disposée sur le même côté du flasque que la première cavité annulaire et agencée pour recevoir un deuxième piston 24 d'actionnement du deuxième embrayage E2,
- des canaux d'alimentation d'huile 54a, 54b et 54c traversant la portion cylindrique 55 et le flasque 53, et débouchant dans les cavités annulaires, notamment à l'intérieur de la chambre d'équilibrage 31 du premier embrayage E1.

Le canal d'alimentation d'huile 54a usiné dans le moyeu central 50 est associé à la chambre de commande du deuxième embrayage E2. Le canal d'alimentation d'huile 54a est réalisé par perçage de conduites successives axiales et radiales au sein du moyeu central 50. Les conduites sont débouchantes les unes dans les autres et agencées pour alimenter en fluide sous pression la chambre de commande du deuxième embrayage E2. Le canal d'alimentation d'huile 54b débouche dans la deuxième cavité 52 annulaire formée directement dans le moyen central 50. Les cavités 51, 52 annulaires des embrayages E1, E2 sont orientées dans une même direction, dans cet exemple en direction de l'arbre menant, en direction du moteur thermique de la chaine de transmission de couple.

La première cavité 51 et la deuxième cavité 52 sont imbriquées radialement l'une au-dessus de l'autre. La première chambre d'équilibrage 31 du premier embrayage est disposée axialement à côté de la première cavité 51. La deuxième chambre d'équilibrage 41 du deuxième embrayage est disposée axialement à côté de la deuxième cavité 52. L'ensemble multidisques du deuxième embrayage E2 est disposé radialement entre la première cavité et la deuxième cavité. De cette manière, il est possible d'exploiter l'espace intérieur disponible au sein du double embrayage humide et ainsi réduire l'encombrement axial.

Le premier embrayage E1 est actionné par un premier piston 14 d'actionnement, qui est commandé en déplacement au moyen d'une chambre de commande 32 à laquelle est associée une chambre d'équilibrage 31. Le piston 14 d'actionnement du premier embrayage E1 est mobile axialement, ici de l'arrière vers l'avant, entre une position débrayée et une position embrayée qui correspondent respectivement aux états ouvert et fermé du premier embrayage E1. L'ensemble multidisques du premier embrayage E1 est actionné directement par le premier piston 14 d'actionnement. Le premier piston d'actionnement 14 est commandé en déplacement au moyen d'une chambre de commande 32 délimitée par la première cavité 51. De manière analogue, le deuxième piston 24 d'actionnement est commandé en déplacement au moyen d'une chambre de commande 42 délimitée par la deuxième cavité 52. Les chambres de commande 32, 42, respectivement du premier embrayage E1 et du deuxième embrayage E2, sont ainsi disposées au plus près du moyeu central d'alimentation d'huile, de manière à réduire les fuites au sein du double embrayage humide.

Le deuxième embrayage E2 est actionné par un deuxième piston 24 d'actionnement, qui est commandé en déplacement au moyen d'une chambre de commande 42 à laquelle est associée une chambre d'équilibrage 41. Le piston 24 d'actionnement du deuxième embrayage E2 est mobile axialement, ici de l'arrière vers l'avant, entre une position débrayée et une position embrayée correspondant respectivement aux états ouvert et fermé du deuxième embrayage E2.

L'ensemble multidisques du deuxième embrayage E2 est actionné directement par le deuxième piston d'actionnement 24 réalisée à partir d'une tôle emboutie. Le deuxième piston 24 d'actionnement est mobile axialement par rapport à la deuxième cavité 52 annulaire du moyeu central 50. De même, l'extrémité libre du deuxième piston 24 d'actionnement du deuxième embrayage E2 en appui sur l'ensemble multidisques est disposée radialement entre la première cavité 51 et la deuxième cavité 52, orientées en direction de l'arbre menant. La portion cylindrique 55 du moyeu central s'étend axialement dans une direction opposée à l'arbre menant. Les chambres d'équilibrages 31, 41 sont alimentées en fluide de refroidissement.

La portion cylindrique comprend les canaux 54a, 54b et 54c d'alimentation d'huile de la première cavité 51, de la deuxième cavité 52et des chambres d'équilibrage 31, 41. Le fluide de refroidissement empreinte un canal d'alimentation d'huile 54b distincts des autres canaux d'alimentation d'huile 54a et 54c. Ce canal d'alimentation d'huile 54b est également formé dans le moyeu central 50 d'alimentation d'huile. Les canaux d'alimentation d'huile 54a, 54b et 54c sont répartis angulairement autour de la portion cylindrique 55. De préférence, ledit moyeu central 50 supporte conjointement les premier et deuxièmes embrayages par exemple au niveau de la portion cylindrique 55 ou du flasque 53. Chacun des canaux 54a, 54b et 54c d'alimentation d'huile sont constitués de perçages sensiblement radiaux et axiaux dirigés en direction des chambres de commande des premier et deuxième embrayages E1, E2, mais aussi en direction des chambres d'équilibrage 31, 32 des premier et deuxième embrayages E1, E2. Les canaux d'alimentation d'huile 54a, 54b, 54c de la première cavité 51, de la deuxième cavité 52 et de la première chambre d'équilibrage 31 sont répartis angulairement autour de l'axe X de rotation et traversent radialement le flasque 53.

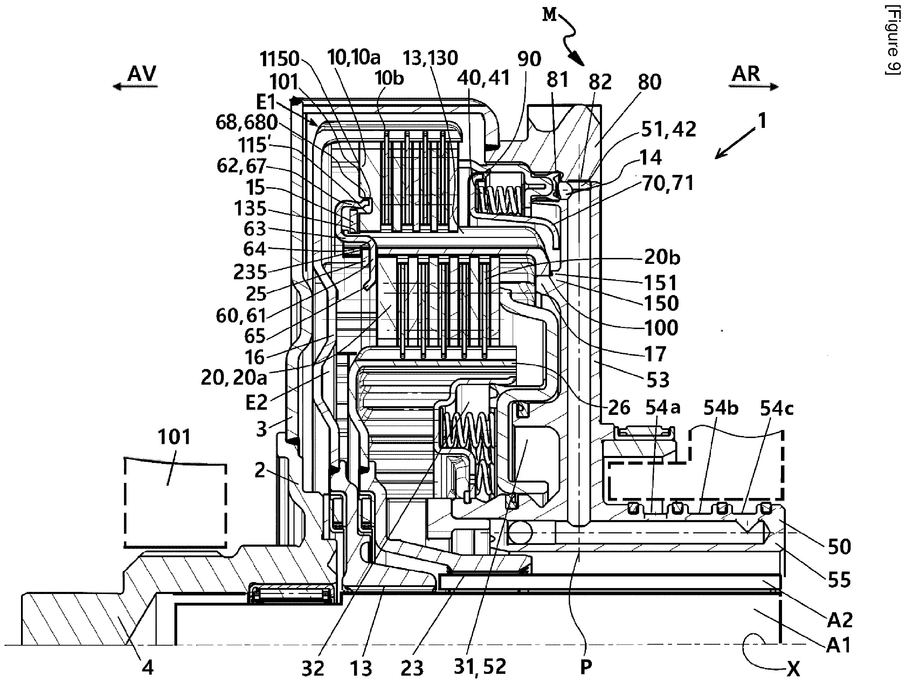

Par exemple, le canal d'alimentation d'huile 54c situé axialement à l'extrémité arrière du moyeu central 50 est associé à la chambre de commande 42 du premier embrayage E1. Le canal d'alimentation d'huile 54c est réalisé par perçage de conduites successives axiales et radiales au sein du moyeu central 50. Les conduites sont débouchantes les unes dans les autres et agencées pour alimenter en fluide sous pression la chambre de commande 32 du premier embrayage E1. Les FIGURES 1 et 9 illustrent chacune le canal d'alimentation d'huile 54b usiné dans le moyeu central 50 et associé à la chambre d'équilibrage du premier embrayage E1. Ce canal d'alimentation d'huile 54b est, dans cet exemple, commun avec le canal d'alimentation d'huile de la chambre d'équilibrage 31 du deuxième embrayage E2. Le canal d'alimentation d'huile 54b est réalisé par perçage de conduites successives axiales et radiales au sein du moyeu central 50.

La première chambre d'équilibrage 31 est délimitée en partie par un couvercle d'équilibrage 70 du premier embrayage E1, de préférence une pièce de type annulaire ou cylindrique, de manière à former une enceinte close dans laquelle débouche le canal 54b. Le couvercle d'équilibrage 70 est localisée radialement entre les premier piston 14 et deuxième piston 24 d'actionnement. Le premier piston 14 d'actionnement et le couvercle d'équilibrage 70 du premier embrayage E1 forment conjointement la chambre d'équilibrage 31 du premier embrayage. Le couvercle d'équilibrage est notamment agencé pour coopérer par glissement avec le premier piston 14 d'actionnement. Le couvercle d'équilibrage 70 est disposé radialement au-dessus de l'ensemble multidisque du deuxième embrayage E2.

Sur les FIGURES 1 et 9, le couvercle d'équilibrage 70 comprend en outre une jupe 76 annulaire ou cylindrique, qui délimite en partie la chambre d'équilibrage 31 du premier embrayage E1.

Un élément de rappel élastique 40 du premier piston 14 d'actionnement, par exemple une rondelle élastique ou un dispositif de rappel élastique, est en appui sur le couvercle d'équilibrage 70 ou formé avec le couvercle d'équilibrage 70, ayant pour fonction de rappeler automatiquement le premier piston 14 d'actionnement en position débrayée, correspondant à un état ouvert de l'embrayage. L'élément de rappel élastique 40 comprend une série de ressorts 41 hélicoïdaux en appui sur le premier piston 14 d'actionnement par l'intermédiaire d'une première plaque d'appui annulaire intercalés axialement entre une paroi avant du premier piston 14 d'actionnement et une surface annulaire de la chambre d'équilibrage.

De cette manière, cette première plaque d'appui supporte la série de ressorts 41 et repousse le premier piston 14 en exerçant un effort axial de compression. A l'opposé, le couvercle d'équilibrage 70 supporte les ressorts 41 hélicoïdaux du premier piston 14, par l'intermédiaire ici d'une deuxième plaque, elle-même en appui sur le couvercle d'équilibrage 70, et plaquée par les ressorts 41. Afin de garantir un fonctionnement optimisé, l'étanchéité de la chambre d'équilibrage 31 est assuré par des joints d'étanchéité, parmi lequel, un joint 90 d'étanchéité du couvercle 70 d'équilibrage, frottant sur la portion cylindrique du premier piston 14. La jupe 76 du couvercle d'équilibrage 70 comprend sur sa périphérie externe 74 un joint 90 d'étanchéité, ici de type surmoulée.

Les deux embrayages E1, E2 comprennent un premier portes-disques 13 d'entrée de couple, dit porte-disques 13 du premier embrayage E1, et un deuxième portes-disques 23 d'entrée de couple, dit porte-disques 23 du deuxième embrayage E2, qui sont liés cinématiquement avec le moteur thermique, liés en rotation au voile 3 d'entrée. La liaison en rotation avec le voile 3 d'entrée est ici réalisée par soudure mais pourrait être réalisée par emboitement de cannelures.

Le premier porte-disques 13 d'entrée de couple est agencée pour recevoir en partie l'ensemble multidisques du premier embrayage E1, dit premier groupe 10a, 10b de disques. Le premier porte-disques 13 comporte une portion cannelée 130, ayant un profil particulier de cannelure, qui engrène en partie le premier groupe 10a, 10b de disques.

Le profil de la portion cannelée 130 est délimitée par une alternance de crêtes 131 et de creux 132. Dans les exemples illustrés, les crêtes 131 entrainent en rotation les plateaux 10a du premier groupe 10a, 10b.

Ce premier groupe 10a, 10b de disques comporte des plateaux 10a liés en rotation au premier porte-disques 13 et des disques 10b de friction liés en rotation à un porte-disques de sortie 16. Les disques 10b de friction sont, unitairement, axialement interposés entre deux plateaux 10a successifs.

Le porte-disques de sortie 16 du premier embrayage E1 est lié en rotation par engrènement avec les disques 10b de friction et par une liaison cannelée avec ledit premier arbre A1 mené. Le porte-disques de sortie 16 présente globalement une forme en « L » dont l'extrémité radiale intérieure est solidarisée à un moyeu de sortie cannelé.

Le deuxième porte-disques 23 est agencée pour recevoir en partie l'ensemble multidisques du deuxième embrayage E2, dit deuxième groupe 20a, 20b de disques. Dans le cas présent, le deuxième porte-disques 23 est de forme cylindrique. Le deuxième porte-disques 23 comporte une portion cannelée 230, ayant un profil particulier de cannelure, qui engrène en partie le deuxième groupe 20a, 20b de disques. Le profil de la portion cannelée 230 est délimité par une alternance de crêtes 231 et de creux 232. En particulier, les crêtes 231 de la portion cannelée 230 sont adaptées pour entrainer en rotation les plateaux 20a du deuxième groupe 20a, 20b de disques. Sur la FIGURE 1 et 9, les portions cannelées 130, 230 sont disposées radialement au-dessus du rebord annulaire 17.

Ce deuxième groupe 20a, 20b de disques comporte des plateaux 20a liés en rotation au deuxième porte-disques 23 et des disques 20b de friction liés en rotation à un porte-disques de sortie 26. Les disques 20b de friction sont, unitairement, axialement interposés entre deux plateaux 20a successifs.

Un porte-disques de sortie 26 du deuxième embrayage E2 est lié en rotation par engrènement avec les disques 20b de friction et par une liaison cannelée avec ledit deuxième arbre A2 mené. Le porte-disques de sortie 26 présente globalement une forme en « L » dont l'extrémité radiale intérieure est solidarisée à un moyeu de sortie cannelé.

De manière avantageuse, le porte-disques 13 du premier embrayage E1 et le porte-disques 23 du deuxième embrayage E2 forment un porte-disques d'entrée de couple commun, réalisé d'un seul tenant. Dès lors, la portion cannelée 130 du premier porte-disques 13 comprend un profil complémentaire avec celui de la portion cannelée 230 du deuxième porte-disques 23.

Dans une telle situation, les portions cannelées 130, 230 sont communes et complémentaires, afin de réduire l'encombrement radiale du mécanisme 1. Les crêtes 131 de la portion cannelée 130 forment de manière complémentaire les creux 232 de la portion cannelée 230. Les creux 132 de la portion cannelée 130 forment de manière complémentaire les crêtes 231 de la portion cannelée 230, comme illustrée sur les FIGURES 1 à 4 et 9 à 10.

En variante non illustrée, le deuxième porte-disques 23 peut être rapporté sur le premier porte-disques 13. Le porte-disques du premier embrayage E1 et le porte-disques du deuxième embrayage E2 peuvent être rapportés l'un sur l'autre, reliés solidement par soudure ou par emboitement de cannelures, formant un porte-disques d'entrée de couple commun.

De manière avantageuse, les premier et deuxième portes-disques 23 font partis d'un sous-ensemble de pièces assemblés, qui comprend en outre ledit moyeu central 50. Dès lors, un rebord annulaire 17 est formé depuis le flasque 53 du moyeu central 50, obtenu par forgeage et usinage et recevant les premier et deuxième portes-disques 13, 23. Lesdits portes-disques 13, 23 sont rapportés sur le rebord annulaire 17, par exemple fixée par soudage. Le rebord annulaire 17 est ici circonférentiellement continu. Le rebord annulaire 17 est issu de matière avec le flasque 53. En variante non illustrée, le rebord annulaire 17 peut être disposé radialement au-dessus des portes-disques 13, 23.

Sur les FIGURES 1 et 9, l'espace libre ménagé entre le rebord annulaire 17 et le reste du flasque 53 permet de recevoir et de maintenir l'extrémité du couvercle d'équilibrage 70. En variante non illustrée, le rebord annulaire 17 peut recevoir en appui le couvercle d'équilibrage 70, en particulier en appui sur ledit bord 73 radialement interne, afin de centrer le couvercle d'équilibrage 70 sur le rebord annulaire 17. Le flasque 53 est lié solidairement en rotation au voile d'entré 3 par l'intermédiaire d'un couvercle d'entrainement 80. Le couvercle d'entrainement 80 est rapporté sur le pourtour extérieur du flasque 53 du moyeu central 50. Le moyeu central 50 a pour fonction de transmettre le couple au sein du double embrayage humide 1. Pour cela, le couvercle d'entrainement 80 est solidaire en rotation avec le moyeu central 50, par l'intermédiaire d'un emmanchement en force sur le flasque 53.

En variante non illustrée, le couvercle d'entrainement 80 peut être soudé sur le flasque du moyeu central.

Le couvercle d'entrainement 80 comprend une denture externe liée cinématiquement avec la machine électrique M tournante, ladite denture étant issue de matière avec le couvercle d'entrainement ou rapportée sur le couvercle d'entrainement. La denture externe présente un profil hélicoïdal de forme complémentaire au pignon de la machine électrique M tournante. Alternativement, la denture pourrait présenter un profil droit de forme complémentaire à une chaine ou une courroie utilisée pour relier la machine électrique M tournante. En variante non illustrée, le couvercle d'entrainement 80 peut comprendre une couronne dentée décalée axialement par rapport au flasque 53 du moyeu central 50.

Le couvercle d'entrainement 80 comprend une portée cylindrique 81 intérieure pour l'appui d'un joint d'étanchéité du premier piston 14 d'actionnement du premier embrayage E1, la portée cylindrique 81 formant en partie la première cavité 51 annulaire. Le canal d'alimentation d'huile 54c débouche dans la première cavité 51 annulaire formée en partie par une extension axiale issue directement du flasque 53 et en partie par le couvercle d'entrainement 80Le couvercle d'entrainement 80 entoure le pourtour extérieur du flasque 53. Dans un autre cas possible, les canaux d'alimentation d'huile peuvent être refermés par la portée cylindrique intérieure du couvercle d'entrainement.

Le premier groupe 10a, 10b de disques comprend en outre un disque d'extrémité 10 qui est situé axialement sur l'extrémité AV dudit groupe 10a, 10b. Le disque d'extrémité 10 est ici un plateaux 10a lié en rotation au premier porte-disques 13, d'épaisseur Ep. L'épaisseur Ep du disque d'extrémité 10 est définie entre ses deux faces latérales 101 et 102, respectivement orientées vers l'avant AV et l'arrière AR de l'embrayage E1. L'épaisseur Ep du disque d'extrémité 10 est supérieure à celle des autres disques 10a, 10b du premier groupe de disques.

Le groupe 20a, 20b de disques comprend un disque d'extrémité 20 situé axialement sur l'extrémité AV dudit deuxième groupe 20a, 20b. Le disque d'extrémité 20 est un plateaux 20a lié en rotation au deuxième porte-disques 23, et ayant également une épaisseur supérieure à celle des autres disques 20a, 20b. En variante non illustrée, les disques d'extrémité 10, 20 peuvent être des disques de friction, liés en rotation à un porte-disques de sortie d'embrayage E1, E2 correspondant.

De manière connue, chaque disque d'extrémité 10, 20 comprend une zone centrale d'axe X pour le passage d'autres éléments du mécanisme d'embrayage, par exemple les arbres A1, A2, les portes-disques 13, 23 d'entrée de couple.

L'actionnement du piston 14, 24 entraine le déplacement axial des plateaux 10a, 20a par rapport aux disques de friction, pour chaque embrayage E1, E2, E1, E2 respectif, suivant une configuration embrayée. Les groupes 10a, 10b et 20a, 20b de disques sont arrêtés respectivement par un anneau d'arrêt axial 15, 25 correspondant.

Les anneaux d'arrêt axial 15, 25 sont généralement de forme élastique et fendue, c'est-à-dire de forme ouverte entre deux extrémités 151, 151' ou 251, 251', afin d'être monté en partie dans le fond de la gorge 135, 235. La deuxième gorge 235 de l'embrayage E2 est décalée axialement par rapport à la première gorge 135 de l'embrayage E1. Les extrémités 151, 151' et 251, 251' respectivement des premier et deuxième anneaux d'arrêt axial 15, 25 définissent entre elles l'ouverture dudit anneau. La périphérie externe de l'anneau d'arrêt axial 15 définit un diamètre extérieur D3 selon l'axe X.

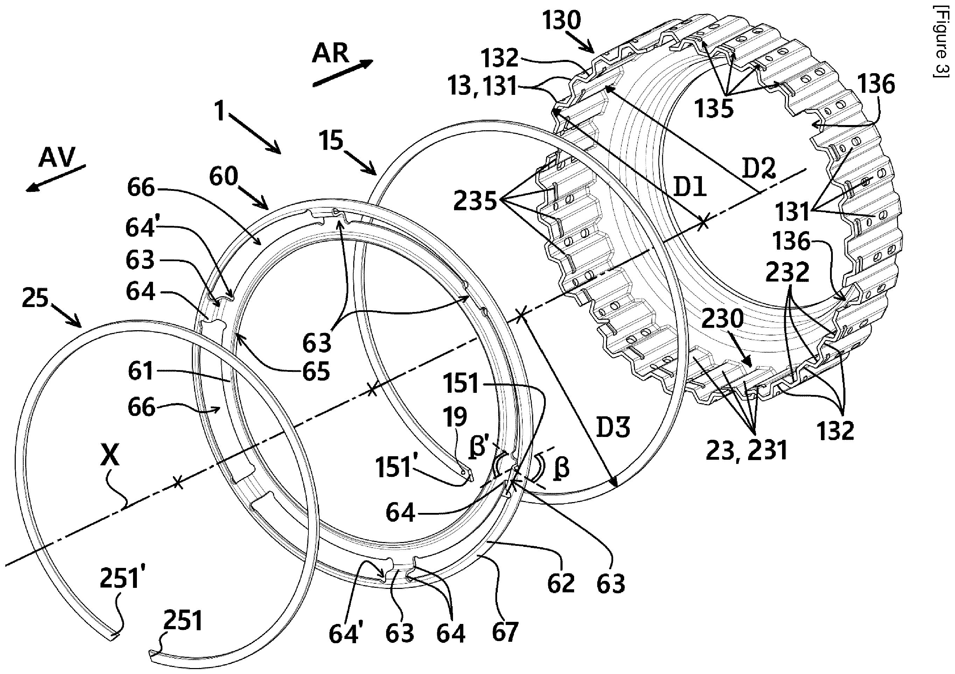

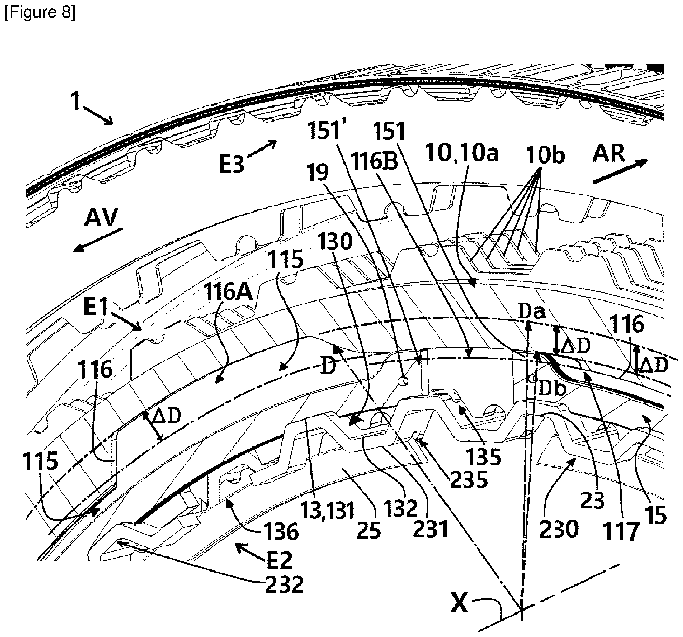

Chaque anneau d'arrêt axial 15, 25 est inséré dans une gorge 135, 235 qui est formée dans la portion cannelée 130, 230 du porte-disques de l'embrayage E1, E2 respectif. Comme illustrée sur les FIGURES 3 et 8, chacune des extrémités comprennent un orifice 19 dans lequel on peut loger l'extrémité d'un outillage de montage, par exemple une pince. Lors de son montage, le premier anneau d'arrêt axial 15 est élastiquement élargi ou écarté, depuis les orifice 19 des extrémités 151, 151', avant d'être relâcher pour qu'il se loge dans la première gorge du premier porte-disques. Sur les FIGURES 1 à 7 et 9 à 10, la forme annulaire du premier anneau d'arrêt axial 15 est de diamètre D3 constant, sans variation.

De préférence, la portion cannelée 130 définit un diamètre extérieur D1 selon l'axe X. La première gorge 135 est formée en direction de l'axe X depuis le diamètre extérieur D1. La gorge 135 est formée par les creux 132 de la portion cannelée 130.

En d'autres termes, la première gorge 135 est ouverte radialement vers l'extérieur. Le fond de la première gorge 135 est circonférentiellement discontinue autour de l'axe X, et il est adapté pour recevoir le premier anneau d'arrêt axial 15, comme illustré sur les FIGURES 1 à 8. Dans une telle situation, la portion cannelée 130 est une cannelure externe, c'est-à-dire orientée vers l'extérieur selon l'axe X.

De manière avantageuse, la portion cannelée 230 définit un diamètre intérieur D2 selon l'axe X. La deuxième gorge 235 est formée en direction de l'axe X depuis le diamètre intérieur D2. En d'autres termes, la deuxième gorge 235 est ouverte radialement vers l'intérieur, ce qui empêche le deuxième anneau d'arrêt 25 de s'échapper axial hors de la deuxième gorge, sous l'effet centrifuge de l'embrayage E2. En variante non illustrée, la portion cannelée 230 peut être de type interne, avec une gorge 235 ouverte radialement vers l'intérieur.

Dans une telle situation, la portion cannelée 230 est donc de type interne, c'est-à-dire orientée vers l'intérieur du mécanisme 1. Sur les FIGURES 1 à 5 et 8, la deuxième gorge 135 est formée par les creux 232 de la portion cannelée 230, et elle est ouvert radialement vers l'intérieur. Le fond de la deuxième gorge 235 est circonférentiellement discontinue autour de l'axe X, et il est adapté pour recevoir le deuxième anneau d'arrêt axial 25.

Le disque d'extrémité 10 est remarquable en ce qu'il est comprend un logement 115, 115', de préférence de forme annulaire. Dans les modes de réalisation des FIGURES 1 à 8, le premier anneau d'arrêt axial 15 est logé en partie à l'intérieur du logement 115.

On entend par logement 115 « annulaire » un espace continuellement ouvert autour de l'axe X, qui reçoit par exemple l'anneau d'arrêt axial 15. Le logement 115 annulaire est une forme de révolution obtenue par exemple par usinage, et dont la périphérie externe 116 définit un diamètre extérieur D. Le diamètre D du logement 115 annulaire est dimensionné de sorte que le premier anneau d'arrêt axial 15 puisse y être inséré avant d'être logé en partie dans la première gorge 135.

Dans les modes de réalisation des FIGURES 1 à 8, le logement 115 débouche radialement sur la zone centrale dudit disque d'extrémité 10.

Par ailleurs, le logement 115, 115' débouche axialement en direction opposé du reste des disques du premier groupe 10a, 10b, vers l'avant AV de l'embrayage E1. Sur les FIGURES 1 à 7, l'espace du logement 115 annuaire est sensiblement constant et uniforme. Sa périphérie externe 116 est de type circulaire et délimite un espace uniformément distant de l'axe X de révolution, de diamètre extérieur D constant. En variante non illustrée, le disque d'extrémité 20 du deuxième groupe peut comporter un logement annulaire à l'intérieur duquel est logé en partie le deuxième anneau d'arrêt axial.

Lors du montage, le premier anneau d'arrêt axial 15 est inséré en partie dans la première gorge 135 formée dans le premier porte-disques 13, notamment par le passage dans le logement 115 annulaire. L'arrêt axial du premier groupe 10a, 10b est ainsi assuré. En particulier sur les FIGURES 1 à 8, le logement 115 annulaire est disposé en regard de la première gorge 135 du premier porte-disques 13.

Au montage du premier anneau d'arrêt axial 15, une partie du premier anneau d'arrêt axial 15 est logé à l'intérieur du logement 115, ici la portion radialement externe du premier anneau d'arrêt axial 15 telle qu'illustrée sur les FIGURES 1 à 8. Dès lors, la première gorge 135 reçoit la partie interne du premier anneau d'arrêt axial 15 et le logement 115 annulaire reçoit la partie externe restante du premier anneau d'arrêt axial 15. Les parties interne et externe de l'anneau d'arrêt axial 15 sont définies par rapport au diamètre extérieur D1.

Il reste néanmoins un espace vide dans le logement 115 annulaire, dit « espace libre », après le montage de l'anneau d'arrêt axial 15. Cet espace libre du logement 115 annulaire est défini radialement entre le diamètre extérieur D3 de l'anneau d'arrêt axial 15 et le diamètre extérieur D la périphérie externe 116 du logement 115 annulaire. Pour une gorge ouverte radialement vers l'extérieur, l'anneau d'arrêt axial 15 a tendance à s'échapper sous l'effet de la rotation du mécanisme 1, depuis l'espace libre du logement 115.

Ce problème s'applique mutatis mutandis à toute gorge ouverte radialement vers l'intérieur recevant un anneau d'arrêt axial, par exemple pour un deuxième embrayage E2. Les modes de réalisation présentés ci-après résolvent ce problème.

Dans les modes de réalisation des FIGURES 1 à 7 et 9 à 10, le disque d'extrémité 10 comprend le logement 115, 115' à l'intérieur duquel est logé une partie d'un organe de retenue 60, ici l'extrémité radialement externe de l'organe de retenue.

Par ailleurs, cet organe de retenue 60 est monté en partie dans le logement 115, 115' :
- soit en étant logé à la suite du premier anneau d'arrêt axial 15 déjà présent dans le logement 115 (voir FIGURES 1 à 7) ;
- soit en étant logé seul dans le logement 115' (voir FIGURES 9 à 10) ;

Dans les modes de réalisation des FIGURES 1 à 7, un organe de retenue 60 est inséré en partie dans le logement 115 annulaire, à la suite du premier anneau d'arrêt axial 15. Positionné en partie entre le premier anneau d'arrêt axial 15 et le logement 115 annulaire, l'organe de retenue 60 comble ainsi l'espace libre restant dans le logement 115 annulaire, et il retient le premier anneau d'arrêt axial 15 en l'empêchant de sortir hors du logement 115 annulaire.

L'organe de retenue 60 est de préférence monobloc et rigide. Il peut être élargi élastiquement, réalisé en matière plastique, élastomère ou composite. L'organe de retenue 60 est par exemple une rondelle d'arrêt en tôle d'acier.

De manière préférée, l'organe de retenue 60 comprend une partie centrale annulaire 61 et une partie périphérique annulaire 62 disposée radialement à l'extérieur de la partie centrale annulaire 61. L'organe de retenue 60 peut avoir sensiblement une forme en S, en C ou en L. Les parties centrale annulaire 61 et périphérique annulaire 62 sont décalées axialement l'une de l'autre. Les parties centrale annulaire 61 et périphérique annulaire 62 sont circonférentiellement continue autour de l'axe X. En variante non illustrée, l'une d'elle ou les deux peuvent être discontinues.

Dans le premier mode, la partie périphérique annulaire 62 retient le premier anneau d'arrêt axial 15.

De manière avantageuse, l'organe de retenue 60 comprend une alternance d'ouvertures 66 et de bras de liaison 63 qui sont disposés entre la partie centrale annulaire 61 et la partie périphérique annulaire 62, pour réduire l'encombrement axial.

Un bras de liaison 63 est défini entre deux ouvertures 66 immédiatement adjacentes. Un bras de liaison 63 est par exemple formé par emboutissage et découpage, et il relie la partie centrale annulaire 61 à la partie périphérique annulaire 62. Le nombre de bras de liaison 63 est généralement compris entre deux et vingt, de préférence entre quatre et douze bras de liaison. En particulier sur la FIGURE 3, l'organe de retenue 60 comprend un nombre pair de bras, ici six bras de liaison 63 de l'organe de retenue 60, qui sont répartis angulairement régulièrement autour de l'axe X.

En variante non illustrée, l'organe de retenue 60 peut comprendre un nombre impair de bras de liaison.

Chaque bras de liaison 63 comprend en outre deux congés 64 de raccordement. Chaque congé 64 de raccordement est un arc de cercle qui relie l'extension dudit bras 63 avec l'une des parties centrale annulaire 61 ou périphérique annulaire 62, pour former un certain angle d'inclinaison β, β'. Dès lors, un bras de liaison 63 s'étend dans la direction radiale suivant l'angle d'inclinaison β, β', l'angle étant strictement supérieur à 15 degrés.

Sur les FIGURES 1 à 4, chaque bras de liaison 63 est dimensionné angulairement suivant la longueur d'une crête 131, suivant un angle d'inclinaison β, β' égale à environ 90 degrés.

Avantageusement, les bras de liaison 63 passent au travers des premier et deuxième portes-disques 13, 23. Chaque ouverture 66 de l'organe de retenue 60 reçoit un segment d'extrémité libre, dit patte d'extrémité libre, de la portion cannelée 130, 230 du premier et/ou du deuxième porte-disques.

La jonction des pattes d'extrémité libre des portions cannelée 130, 230 comprend des rayons de raccordement. Un rayon de raccordement délimite entre deux pattes une encoche 136. Par « encoche », on entend une ouverture ayant un contour de type ouvert, arrondi, et réalisé par exemple par évidemment de matière.

De préférence, on dimensionne une encoche 136 suivant la longueur d'au moins une crête 131 ou 231, et angulairement entre deux creux 232 ou 131 immédiatement adjacents. Afin de réduire l'encombrement axial, les bras de liaison 63 sont insérés dans des encoches 136 qui sont formés sur le premier porte-disques 13 et sur le deuxième porte-disques 23, entre les diamètres D1 et D2.

Chaque encoche 136 reçoit au moins un bras de liaison 63 de l'organe de retenue 60. Les encoches 136 sont formées sur l'extrémité libre des portions cannelées 130 et/ou 230 et elles sont espacées circonférentiellement autour de l'axe X.

Dans les exemples illustrés, chaque encoche 136 est formée suivant une crête 131 du premier porte-disques. Les encoches 136 sont ici espacées de quatre crêtes 131 immédiatement adjacentes de la portion cannelée 130. Le congé 64 de raccordement reliant la partie périphérique annulaire 62 peut être disposé en regard d'une encoche 136 correspondante. En variante non illustrée, les encoches 136 peuvent être dimensionnés selon les crêtes 231 de la portion cannelée 230.

Les bras de liaison 63 sont pliés à partir d'entailles 64' formées respectivement sur les parties centrale annulaire 61 et périphérique annulaire 62. Les entailles 64', réparties par paires, sont disposées autour de l'axe X. Le bras de liaison 63 est issue de la forme de l'entaille 64'. Par « entaille », on entend un retrait de matière longitudinal, dit radial, pratiqué sur les deux parties 61, 62, par découpage et/ou retrait de matière, lors du procédé de fabrication de l'organe de retenue 60.

Par ailleurs, l'organe de retenue 60 comprend un rebord annulaire 67, notamment agencé pour recouvrir le premier anneau d'arrêt 15. De manière avantageuse, le rebord annulaire 67 est adapté pour être logé à l'intérieur du logement 115. Ainsi, le rebord annulaire 67 est dimensionné suivant l'espace resté libre du logement 115 annulaire après le montage du premier anneau d'arrêt axial 15. Le rebord annulaire 67 est logé radialement entre le disque d'extrémité 10 et le premier anneau d'arrêt axial 15, pour combler l'espace vide restant dans le logement 115 et chapeauter l'anneau d'arrêt axial 15.

De préférence, la partie périphérique annulaire 62 forme en partie le rebord annulaire 67, et il est disposé radialement à l'extérieur du premier anneau d'arrêt axial 15. Dans les exemples illustrés, le rebord annulaire 67 peut former l'extrémité radialement externe de l'organe de retenue 60. L'organe de retenue 60 comprend en outre une extrémité radialement interne 65, qui peut former également un rebord annulaire.

Dans le premier mode de réalisation, le rebord annulaire 67 est circonférentiellement continu autour de l'axe X, pour combler l'espace libre du logement 115 annulaire sur 360 degrés. Le rebord annulaire 67 est obtenu par exemple par forgeage et usinage de l'organe de retenue 60.

Dans le sixième mode de réalisation, le rebord annulaire 67 est circonférentiellement discontinu, formé par une pluralité de portions 670 réparties angulairement autour de l'axe X, notamment selon une répartition régulière. Dans cette situation, chaque portion 670 du rebord annulaire 67 est délimitée entre deux bras de liaison 63 adjacents. De même, les portions 670 du rebord annulaire 67 peuvent recouvrir au moins en partie le premier anneau d'arrêt 15.

Dans le premier mode, l'organe de retenue 60 s'étend radialement entre le premier embrayage E1 et le deuxième embrayage E2. Sur les FIGURES 1 à 4, la partie périphérique annulaire 62 est située radialement au niveau du premier embrayage E1. La partie centrale annulaire 61 est localisée au niveau du deuxième embrayage E2. Le maintien axial de la partie périphérique annulaire 62 est maintenue fixe hors du premier embrayage E1, depuis la partie centrale annulaire 61

L'organe de retenue 60 est maintenu axialement par au moins une composant du deuxième embrayage E2, ici par le deuxième anneau d'arrêt axial 25. Dès lors, la partie centrale annulaire 61 de l'organe de retenue 60 est arrêtée axialement par le deuxième anneau d'arrêt axial 25, afin de contenir la partie périphérique annulaire 62 dans le logement 115 annulaire. De préférence, les bras de liaison 63 s'étendent en direction du deuxième embrayage E2, de manière inclinée dans la direction axiale selon un certain angle d'inclinaison β, β'.

De manière avantageuse, la partie centrale annulaire 61 est intercalée entre le deuxième anneau d'arrêt axial 25 et le disque d'extrémité 20 du deuxième groupe 20a, 20b. Sur les FIGURES 1 à 4, le deuxième anneau d'arrêt axial 25 et le disque d'extrémité 20 maintiennent axialement de part et d'autre la partie centrale annulaire 61 de l'organe de retenue 60.

En variante non illustrée, le disque d'extrémité 20 du deuxième groupe 20a, 20b de disques peut comporter un logement annulaire à l'intérieur duquel est logé la partie centrale annulaire 61 de l'organe de retenue, limitant davantage l'encombrement.

Une telle configuration peut s'appliquer mutatis mutandis à la partie périphérique annulaire 62, dans le cas où le premier embrayage E1 serait disposé radialement en-dessous du deuxième embrayage E2. Dans une telle situation non illustrée, la partie centrale annulaire 61 dudit organe de retenue, disposé au niveau du premier embrayage E1, retiendrait le premier anneau d'arrêt axial 15, et la partie périphérique annulaire 62 serait disposé au niveau du deuxième embrayage E2.

On va maintenant décrire le procédé d'assemblage d'un mécanisme 1, tel qu'illustré dans le premier mode de réalisation des FIGURES 1 à 4. L'assemblage comporte, entre autre, les étapes suivantes :
- Selon une première étape, on fournit, pour un premier embrayage E1 :
   - un premier porte-disques 13, d'axe X de révolution et comprenant une première gorge 135,
   - un premier groupe 10a, 10b de disques dont un disque d'extrémité 10 comprend un logement 115 annulaire,
   - un premier anneau d'arrêt axial 15 et un organe de retenue 60 ;
- Selon une deuxième étape, on empile de manière alternée les disques du premier groupe 10a, 10b supportés en partie par le premier porte-disques 13, en finissant par le disque d'extrémité 10 supporté par le premier porte-disques 13 ;
- Selon une troisième étape, on insère le premier anneau d'arrêt axial 15 à l'intérieur du logement 115 annulaire du disque d'extrémité 10 du premier groupe 10a, 10b, avant de loger le premier anneau d'arrêt axial 15 en partie dans la première gorge 135 du premier porte-disques 13.
- Selon une quatrième étape, on insère une partie de l'organe de retenue 60, par exemple la partie périphérique annulaire 62, dans l'espace libre restant à l'intérieur du logement 115 annulaire du disque d'extrémité 10.

Le démontage du premier anneau d'arrêt axial 15 est possible de manière simple, en retirant l'organe de retenue 60 dudit logement 115. Le logement 115 annulaire et la première gorge 135 sont de préférence en regard l'un de l'autre, de sorte que le premier anneau d'arrêt axial 15 est conjointement logé dans la gorge 135 et dans le logement 115 annulaire.
- Selon une cinquième étape additionnelle, on fournit, pour un deuxième embrayage E2 :
   - un deuxième porte-disques 23, d'axe X de révolution et comprenant une deuxième gorge 235,
   - un deuxième groupe 20a, 20b de disques dont un disque d'extrémité 20 ;
- Selon une sixième étape additionnelle, on met en appui axial une autre partie de l'organe de retenue 60, par exemple la partie centrale annulaire 61, sur le disque d'extrémité 20 du deuxième groupe 20a, 20b de disques ;
- Selon une septième étape additionnelle, on met en appui axial le deuxième anneau d'arrêt axial 25 sur le disque d'extrémité 20 du deuxième groupe 20a, 20b de disques, puis on loge en partie le deuxième anneau d'arrêt axial 25 dans la deuxième gorge 235 du deuxième porte-disques 23.

Le deuxième anneau d'arrêt axial 25 est monté uniquement après le montage de l'organe de retenue 60, soit après la mise en appui axial de la partie centrale annulaire 61 sur le disque d'extrémité 20 du deuxième groupe 20a, 20b.

On monte ainsi fixement l'organe de retenue 60 durant l'assemblage des embrayages E1, E2. Le démontage du premier anneau d'arrêt axial 15 est possible en retirant successivement : le deuxième anneau d'arrêt axial 25 de la deuxième gorge 235 au niveau du deuxième embrayage E2, puis l'organe de retenue 60 du logement 115 annulaire au niveau du premier embrayage E1.

Dans un autre mode de réalisation non illustrée, l'organe de retenue peut être fixé solidairement au disque d'extrémité par soudure, ou par déformation par presse, ou encore par tout autre moyen de fixation ou de montage par ajustement serré. On évite tout risque pour l'organe de retenue s'échapper hors du logement dudit disque d'extrémité. Dans une telle situation, le logement du disque d'extrémité peut être par exemple adapté à recevoir une soudure, la soudure étant par exemple réalisée entre la partie périphérique annulaire et une paroi radialement externe du logement.

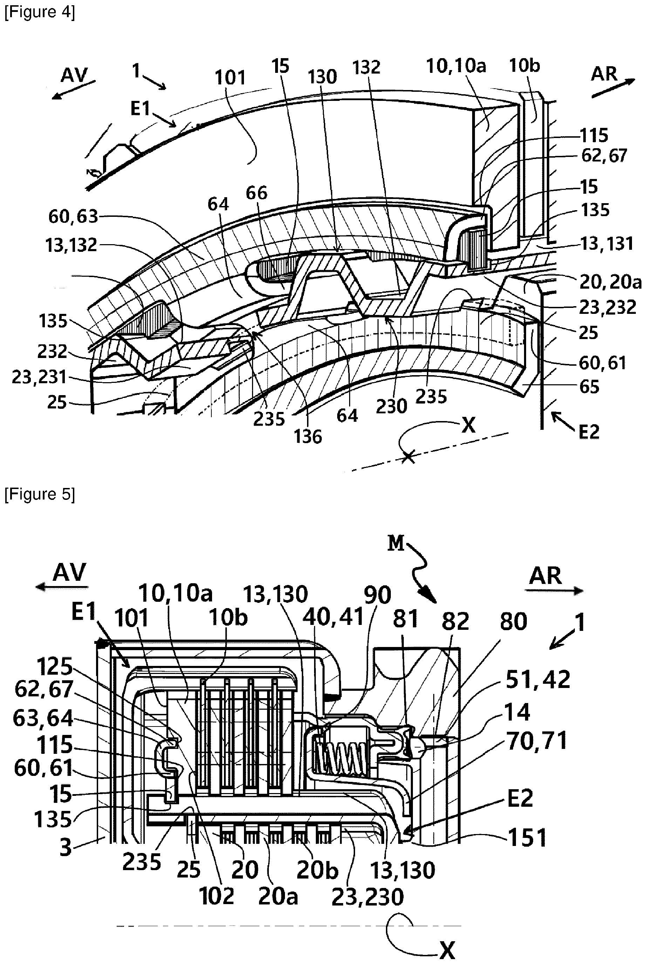

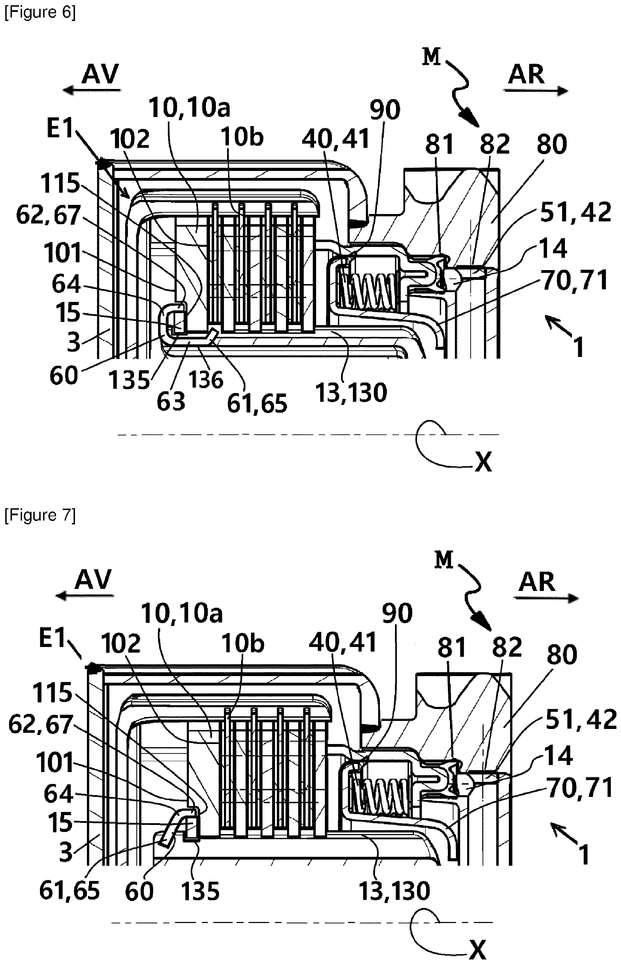

On a décrit sur les FIGURES 5 et 6, respectivement un deuxième et un troisième mode de réalisation de l'invention sensiblement similaire au premier mode de réalisation, à l'exception du fait que l'organe de retenue 60 du premier anneau d'arrêt axial 15 est maintenu axialement par un composant 10, 13 d'arrêt appartenant au premier embrayage E1.

Dans les deuxième et troisième modes, l'organe de retenue 60 est déformé élastiquement pour être maintenu axialement par rapport audit composant 10, 13 du premier embrayage E1, ici le disque d'extrémité 10. L'organe de retenue 60 est maintenu fixe axialement sur le disque d'extrémité 10, d'épaisseur Ep, du premier groupe 10a, 10b.

Dans les deuxième et troisième modes, le disque d'extrémité 10 est ici un plateau 10a formant ledit composant d'arrêt du premier embrayage E1. Le disque d'extrémité 10 reçoit les deux extrémités 151, 151' de l'organe de retenue 60. Les parties centrale annulaire 61 et périphérique annulaire 62 de l'organe de retenue 60 sont disposées au niveau du disque d'extrémité 10.

Dans le deuxième mode, une partie de l'organe de retenue 60 est en appui axial sur la face latérale 101 orientée vers l'avant AV de l'embrayage E1. Plus précisément, le disque d'extrémité 10 comprend en outre une cavité 125 annulaire, formée depuis sa face latérale 101, et à l'intérieur de laquelle est logée une partie de l'organe de retenue 60.

Sur la FIGURE 5, la cavité 125 annulaire est disposée radialement au-delà du logement 115 annulaire.

Dans le deuxième mode, la partie périphérique annulaire 62 est logée à l'intérieur de la cavité 125 annulaire, par montage en force, emboitement ou par tout autre moyen d'assemblage connu. La partie centrale annulaire 64 est alors immobilisée dans le logement 115 annulaire, pour retenir le premier anneau d'arrêt axial 15. De préférence, la largeur de la cavité 125 annulaire est dimensionnée suivant celle de la partie périphérique annulaire 62.

En variante non illustrée, la cavité 125 peut être formée d'un ensemble d'évidements espacés, répartis angulairement autour de l'axe X, de manière régulière. Dès lors, la partie périphérique annulaire 62 peut être discontinue autour de l'axe X.

Dans ce troisième mode, une partie de l'organe de retenue 60 est en appui axial sur la face latérale 102 du disque d'extrémité 10, ladite face latérale 102 d'appui étant orientée vers l'arrière AR de l'embrayage E1 et opposée à la face latérale 101. De préférence, la face latérale 102 d'appui est axialement opposée au logement 115 annulaire.

Plus précisément, la partie centrale annulaire 61 est en appui axial sur la face latérale 102 d'appui, de manière à fixer l'organe de retenue 60. La partie périphérique annulaire 62 est alors logée à l'intérieur du logement 115 annulaire, pour retenir le premier anneau d'arrêt axial 15. Sur la FIGURE 6, l'appui axial de l'organe de retenue 60 est réalisé sur la face latérale 102 d'appui depuis la périphérie interne du disque d'extrémité 10, autrement dit, depuis la zone centrale du disque d'extrémité 10. L'organe de retenue 60 peut être sensiblement en forme de C ou bien de U renversé.

Dans ce troisième mode, les bras de liaison 63 s'étendent radialement en partie en dessous du disque d'extrémité 10, en passant au travers du premier porte-disques 13 via les encoches 136. Les congés 64 de raccordement peuvent être sollicités en déformation lors du montage de l'organe de retenue 60, de manière à exercer un effort de serrage sur la partie centrale annulaire 61, pour maintenir fixe axialement l'organe de retenue 60.

Sur la FIGURE 6, l'extrémité de la partie centrale annulaire 61 est disposée en dessous du disque de friction 10b immédiatement adjacent au disque d'extrémité 10. La partie centrale annulaire 61 est reçue en partie dans un espace délimité axialement entre le disque d'extrémité 10 et un plateau 10a du premier groupe de disques immédiatement adjacent. En variante non illustrée, l'extrémité de la partie centrale annulaire 61 peut prendre appui sur un plateau 10a autre que le disque d'extrémité 10, par exemple le plateau 10a du premier groupe de disques qui lui est immédiatement adjacent.

On a décrit sur la FIGURE 7, un quatrième mode de réalisation de l'invention sensiblement similaire au premier mode de réalisation, à l'exception du fait que l'organe de retenue 60 du premier anneau d'arrêt axial 15 est maintenu axialement par un composant du premier embrayage E1, dit « pièce avoisinante ». Dans ce mode de réalisation, l'organe de retenue 60 est déformé élastiquement pour être maintenu axialement par rapport audit composant 10, 13 du premier embrayage E1, ici le premier porte-disques 13 du premier embrayage E1. Plus précisément, l'organe de retenue 60 rigide est ici maintenu fixe axialement par appui sur la portion cannelée 130 du premier porte-disques 13.

Dans ce quatrième mode, la portion cannelée 130 est liée en rotation au disque d'extrémité 10 comprenant le logement 115 annulaire, et elle forme ainsi ladite pièce avoisinante du premier embrayage E1. Sur la FIGURE 7, la partie centrale annulaire 61 est en appui axial sur l'extrémité libre de la portion cannelée 130, par exemple par montage en force, par emboitement ou par tout autre moyen d'assemblage connu, de manière à fixer l'organe de retenue 60. La partie périphérique annulaire 62 est alors logée à l'intérieur du logement 115 annulaire, de manière à retenir le premier anneau d'arrêt axial 15. L'organe de retenue 60 peut être sensiblement en forme de L inversé.

On a décrit sur la FIGURE 8, un cinquième mode de réalisation de l'invention sensiblement similaire au premier mode de réalisation, à l'exception du fait que le logement 115 annulaire du disque d'extrémité 10 comprend une périphérie externe 116 qui est délimitée par un diamètre extérieur D radialement variable. Dès lors, la périphérie externe 116 du logement 115 annulaire s'étend dans la direction radiale selon une variation ΔD. La forme du logement 115 annulaire n'est donc pas circulaire mais radialement variable selon une variation ΔD, à l'inverse des autres modes de réalisation précédemment illustrés. Le mécanisme 1 ne comprend pas d'organe additionnel de retenue.

Cette variation ΔD du diamètre extérieur D est définie entre le plus grand diamètre extérieur dudit logement, dit « diamètre maximal Da », et le plus petit diamètre extérieur du logement annulaire, dit « diamètre minimal Db » dudit logement. Le diamètre extérieur D s'étend donc radialement entre les diamètres maximal Da et minimal Db.

Dans ce cinquième mode, le logement 115 annulaire comprend au moins une zone 116A de plus grand diamètre Da extérieur et au moins une zone 116B de plus petit diamètre Db extérieur. Les zones 116A et 116B s'étendent de manière continue dans la direction circonférentielle.

Sur la FIGURE 8, le logement 115 annulaire comprend ainsi une seule zone 116A et une seule zone 116B. En variante non illustrée, la variation ΔD peut s'étendre de manière continue circonférentiellement autour de l'axe X.

Cette variation ΔD de la périphérie externe 116 présente l'avantage pour le logement 115 annulaire de former au moins en partie la retenue du premier anneau d'arrêt axial 15, en recevant le premier anneau d'arrêt axial 15, au niveau de la zone 116A de plus petit diamètre Db extérieur. L'usinage d'un tel logement annulaire, défini suivant la variation ΔD du diamètre extérieur D, réduit au minimum l'espace libre dans au moins une zone 116B du logement annulaire.

En d'autres termes, le premier anneau d'arrêt axial 15 est en appui sur le plus petit diamètre Db extérieur du logement 115 annulaire. La périphérie externe 116 se rapproche radialement de l'axe X, de sorte à pincer ou serrer le premier anneau d'arrêt par rotation sur le logement annuaire, dans la zone 116A de plus petit diamètre Db extérieur. A titre d'exemple, la périphérie externe dudit anneau d'arrêt axial 15 peut venir en appui sur la périphérie externe 116 de la zone 116A du logement 115. Le diamètre minimal Db est alors égal au diamètre extérieur D3 de l'anneau d'arrêt axial 15.

De manière avantageuse, des moyens de retenue 18 sont formés depuis la périphérie externe du premier anneau d'arrêt axial 15, et ils font saillies radialement à l'extérieur du premier anneau d'arrêt axial 15, afin de coopérer en partie avec la périphérie externe 116 du logement 115 annulaire. Les moyens de retenue 18 du premier anneau d'arrêt axial 15 sont pincés ou serrés par rotation sur le logement annuaire, sur le plus petit diamètre Db extérieur du logement 115 annulaire, au niveau de la zone 116B du logement 115 annulaire.

La périphérie externe 116 de la zone 116A de plus grand diamètre Da est adaptée pour recevoir, lors du montage, lesdits moyens de retenue 18 du premier anneau d'arrêt axial 15, avant que ces derniers ne soient positionnés dans la zone 116B de plus petit diamètre Db, par rotation (ou pivotement angulaire) du premier anneau d'arrêt axial 15.

De manière préférée, les moyens de retenue 18 sont des lobes d'arrêt, formés sur les deux extrémités 151, 151' dudit premier anneau d'arrêt axial 15 de type ouvert. Ces lobes d'arrêt 180 du premier anneau d'arrêt axial 15 font saillis radialement en direction de la périphérie externe 116 du logement 115. Le diamètre minimal Db est alors égal au diamètre extérieur des lobes d'arrêt 180 du premier anneau d'arrêt axial 15, comme illustré sur la FIGURE 8.

En variante non illustrée, les moyens de retenue peuvent être formés entre les deux extrémités 151, 151' dudit anneau d'arrêt axial 15, de sorte à former par exemple des vagues circonférentielles d'arrêt du premier anneau d'arrêt axial 15.

En particulier, chaque lobe d'arrêt 180 comprend un orifice 19, dans lequel on peut loger l'extrémité d'un outillage de montage, par exemple une pince. Lors de son montage dans le logement 115, le premier anneau d'arrêt axial 15 est élastiquement élargi ou écarté, depuis les orifices 19 des extrémités 151, 151', avant d'être relâché élastiquement pour qu'il se loge dans la première gorge 135 du premier porte-disques 13.

Sur la FIGURE 8, la forme de la zone 116B de plus petit diamètre Db est dimensionnée suivant celle des moyens de retenue 18. De préférence, la forme de la zone 116B de plus petit diamètre Db est complémentaire à celle des moyens de retenue 18 du premier anneau d'arrêt axial 15, plus précisément à celle des lobes d'arrêt 180. Par exemple, au moins un lobe d'arrêt 180 coopère avec une surface creuse et arrondie de la périphérie externe 116 de la zone 116B.

De manière avantageuse, la périphérie externe 116 de la zone 116B de plus petit diamètre Db comprend en outre au moins un rebord d'arrêt 117 en rotation, pour arrêter le premier anneau d'arrêt axial 15. Ce rebord d'arrêt 117 en rotation est destiné à bloquer le lobe d'arrêt 180 15 suivant une certaine position angulaire prédéfinie par le logement 115 annulaire, pour un positionnement optimal et simplifié du premier anneau d'arrêt axial 15, lors du montage.

On va maintenant décrire le procédé d'assemblage d'un mécanisme 1 d'embrayage, tel qu'illustré dans le cinquième mode de réalisation de la FIGURE 8. L'assemblage comporte, entre autre, les étapes suivantes :
- Selon une première étape, on fournit, pour un premier embrayage E1 :
   - un premier porte-disques 13 comprenant une première gorge 135,
   - un premier groupe 10a, 10b de disques dont un disque d'extrémité 10 comprend un logement 115 annulaire délimité par un diamètre extérieur D radialement variable ΔD, ledit logement 115 annulaire comprenant une zone 116A de plus grand diamètre Da et une zone 116B de plus petit diamètre Db,
   - un premier anneau d'arrêt axial 15,
- Selon une deuxième étape, on insère le premier groupe 10a, 10b de disques sur le premier porte-disques 13 en finissant par un disque d'extrémité 10 lié en rotation avec le premier porte-disques 13.
- Selon une troisième étape, on élargit élastiquement le premier anneau d'arrêt axial 15 puis on l'insère à l'intérieur du logement 115 annulaire dans la zone 116A de plus grand diamètre Da, par exemple en écartant élastiquement l'ouverture définie entre les deux extrémités 151, 151' du premier anneau d'arrêt axial 15, pour que ce dernier puisse se positionner ensuite par relâchement élastique dans la première gorge 135 du premier porte-disque 13.
- Selon une quatrième étape, on relâche élastiquement le premier anneau d'arrêt axial 15 pour qu'il se loge dans la première gorge 135 du premier porte-disques 13. Le logement 115 annulaire et la première gorge 135 sont disposés en regard l'un de l'autre, de sorte que le premier anneau d'arrêt axial 15 est conjointement logé dans la gorge 135 et dans le logement 115.
- Selon une cinquième étape, on pivote le premier anneau d'arrêt axial 15 pour le positionner dans la zone 116B de plus petit diamètre Db du logement 115 annulaire. Le démontage du premier anneau d'arrêt axial 15 est possible de manière simple, en retirant l'organe de retenue 60 du logement 115 annulaire.

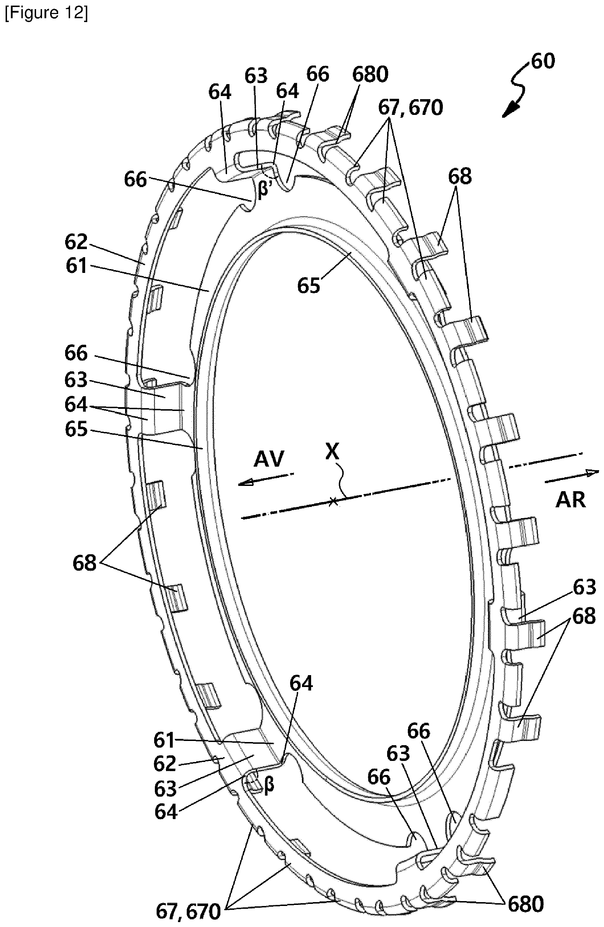

On a décrit sur les FIGURES 9 à 12, un sixième mode de réalisation de l'invention sensiblement similaire au premier mode de réalisation, à l'exception du fait que :
- Le logement 115' loge uniquement l'organe de retenue 60 ;
- L'intérieur du logement 115' est exempte d'anneau d'arrêt axial ;
- Le premier anneau d'arrêt axial 15 et le disque d'extrémité 10 sont décalés axialement l'un de l'autre. Notamment, le logement 115 du disque d'extrémité 10 et la gorge sont décalés axialement l'un de l'autre. En particulier, le premier anneau d'arrêt axial 15 est intercalé axialement entre l'organe de retenue 60 et le disque d'extrémité 10.
- Le premier anneau d'arrêt axial 15 est davantage éloigné axialement du disque d'extrémité 10. Dès lors, pour maintenir fixe l'organe de retenue 60 par rapport au disque d'extrémité 10, l'organe de retenue 60 peut comprendre des pattes de retenue 68, notamment agencées pour être logées à l'intérieur du logement 115', de préférence fixement.

On réalise alors le logement 115' ayant des dimensions réduites étant donné qu'il est adapté à recevoir uniquement l'organe de retenue. On réduit le retrait de matière réalisé dans le disque d'extrémité 10 du premier groupe.

Dans ce sixième mode, le logement 115' du disque d'extrémité est circonférentiellement discontinue, notamment formé d'une série d'évidements espacés, réalisés par retraits de matière localisés. Les évidements sont répartis angulairement autour de l'axe X, de préférence selon une répartition régulière ou uniforme, et forment le logement 115'. L'évidement du logement 115' comprenant un contour fermé, ici de forme circulaire. On réduit davantage le retrait de matière du disque d'extrémité. Les évidements du logement sont disposés axialement en regard des pattes de retenue 68.

De préférence, la partie périphérique annulaire 62 forme en partie ces pattes de retenue 68, et ils sont disposés radialement à l'extérieur du premier anneau d'arrêt axial 15. Par ailleurs, ces pattes de retenue 68 peuvent aussi former l'extrémité radialement externe de l'organe de retenue. A titre d'exemple, les pattes de retenue 68, ici au nombre de vingtquatre, sont réparties angulairement autour de l'axe X, notamment selon une répartition régulière ou uniforme.

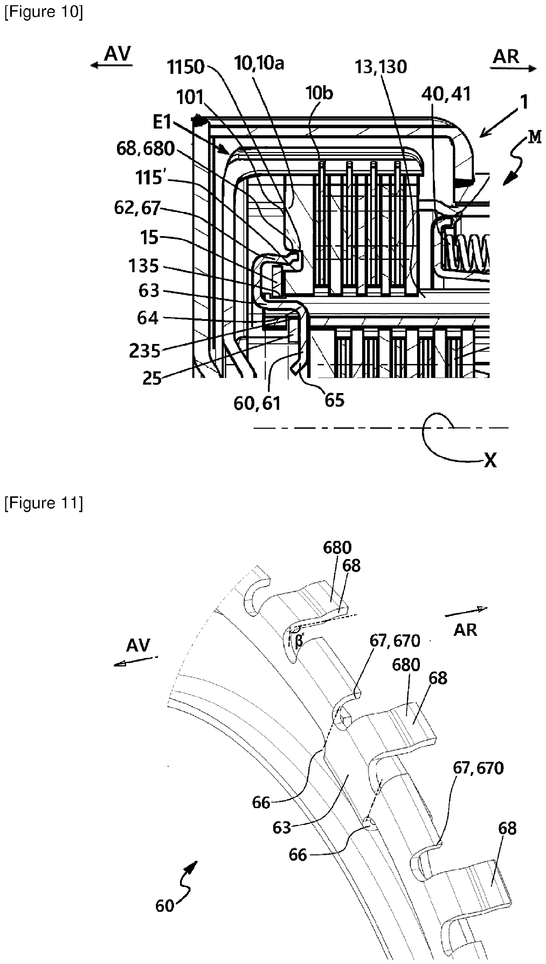

Dans ce sixième mode, chaque patte de retenue 68 s'étend radialement depuis la partie périphérique annulaire 62, pour former un certain angle d'insertion β", de préférence égale à 90 degrés. Dans l'exemple illustré, les pattes de retenue 68 peuvent s'étendre parallèlement à l'axe X, notamment en direction de la périphérie radialement externe du logement 115'. En particulier, les pattes de retenue 68 s'étendent en direction des évidements du logement, notamment sur leur contour radialement externe, ici incurvée ou circulaire. En particulier, au moins certaines des pattes de retenue 68 sont disposées axialement en regard des bras 63, comme illustré en détails sur la FIGURE 11.

Alternativement ou en complément, la partie centrale annulaire 61 peut comprendre des pattes de retenue (non illustrées) agencées pour être logées à l'intérieur d'un logement du disque d'extrémité du deuxième groupe. Dans cette situation, de telles pattes de retenue peuvent également former l'extrémité radialement interne de l'organe de retenue, au niveau du deuxième embrayage. Par ailleurs, l'organe de retenue 60 comprend une alternance des pattes de retenue 68 et de portion 670 du rebord annulaire 67. L'avantage est de les répartir équitablement réparties autours du premier anneau d'arrêt 15, ce qui limite le défaut de parallélisme entre pièces.

Par ailleurs, les pattes de retenue 68 sont réalisées par découpage et pliage de la partie périphérique annulaire 62. Notamment, les pattes de retenue 68 sont d'extensions axiales et réalisées par déformation de matière à leur extrémité, de sorte à former des régions d'appuis 680. Ces régions d'appuis 680, réalisés de préférence sous formes de bossages des pattes de retenue 68, sont adaptés à coopérer avec l'intérieur du logement 115'. De préférence, les régions d'appuis 680 prennent appui sur la périphérie radialement externe 1150 du logement 115', ce qui améliore le maintien de l'organe de retenue 60 par rapport audit disque d'extrémité 10. Ces pattes de retenue 68 peuvent à la fois recouvrir le premier anneau d'arrêt 15 axial et être logées dans le logement 115', exerçant ainsi une double fonction.

On va maintenant décrire le procédé d'assemblage d'un premier embrayage E1, pour les premier et sixième modes de réalisation, comportant au moins les étapes suivantes :
- Selon une première étape (a), on fournit :
   - un premier porte-disques 13 d'axe X de révolution et comprenant une première gorge 135,
   - un premier groupe 10a, 10b de disques dont un disque d'extrémité 10 comprend un logement 115, 115', le logement pouvant être notamment continue ou discontinue, par exemple de forme annulaire ;
   - un premier anneau d'arrêt axial 15, et un organe de retenue 60 ;
- Selon une deuxième étape (b), on empile de manière alternée les disques 10a, 10b du premier groupe supportés en partie par le premier porte-disques 13, en finissant par le disque d'extrémité 10 supporté par le premier porte-disques 13 ;
- Pour le premier mode de réalisation (voir FIGURES 1 à 4) :
   - Selon une troisième étape (c), on insère le premier anneau d'arrêt axial 15 à l'intérieur du logement 115 du disque d'extrémité du premier groupe, avant de le loger en partie dans la première gorge 135 du premier porte- disques 13 ;
   - Puis, selon une quatrième étape (d), on insère une partie de l'organe de retenue 60 dans l'espace libre restant à l'intérieur du logement 115 du disque d'extrémité 10 du premier groupe ;
- Alternativement, pour le sixième mode de réalisation (voir FIGURES 9 à 10) :
- Selon une troisième étape (c'), on insère en partie le premier anneau d'arrêt axial 15 dans la première gorge 135 du premier porte-disques 13 ;
- Puis, selon une quatrième étape (d'), on insère une partie de l'organe de retenue 60 à l'intérieur du logement 115' du disque d'extrémité (10) du premier groupe, le logement 115' recevant notamment uniquement l'organe de retenue 60.

Le mécanisme 1 à double embrayage humide selon l'invention pourrait par exemple être associé à un embrayage de coupure de type K0 qui serait dans ce cas disposé en amont de l'élément d'entrée 2 de couple. L'embrayage de coupure K0 permettrait alors de déconnecter le moteur thermique du reste de la chaine de transmission.

Par exemple, le mécanisme 1 selon l'invention pourrait faire partie d'un triple embrayage ou un embrayage hybride, destiné à équiper des transmissions automatique, robotisée, hybride et/ou électrique d'un véhicule automobile. La disposition des premier et deuxième embrayages E1, E2 peut être aussi inversé.

Dans les revendications, tout signe de référence entre parenthèses ne saurait être interprété comme une limitation de revendication;

## Revendications

1. [Embrayage (E1) de type multidisques pour mécanisme (1) d'embrayage, comprenant :
- un porte-disques (13) d'embrayage,
- un premier groupe de disques (10a, 10b) supporté en partie par le porte-disques (13) d'embrayage et comportant un disque d'extrémité (10),
- un premier anneau d'arrêt axial (15) inséré en partie dans une première gorge (135) formée dans le porte-disques (13) d'embrayage (E1), et
- un organe de retenue (60) du premier anneau d'arrêt axial (15), le disque d'extrémité (10) comprenant un logement (115, 115') à l'intérieur duquel est logé une partie de l'organe de retenue (60), l'organe de retenue (60) étant situé en partie entre le premier anneau d'arrêt axial (15) et le logement (115, 115') annulaire du disque d'extrémité (10).

2. Embrayage (E1) selon la revendication 1, dans lequel ledit premier anneau d'arrêt axial (15) est logé à l'intérieur du logement (115) du disque d'extrémité (10), le logement (115) étant de préférence de forme annulaire.

3. Embrayage (E1) selon la revendication 1 ou 2, dans lequel le porte-disques (13) d'embrayage (E1) comprend une portion cannelée (130) agencée pour entrainer en rotation une partie du premier groupe de disques (10a), la première gorge (135) étant formée sur le diamètre extérieur (D1) de la portion cannelée (130).

4. Embrayage (E1) selon l'une des revendications 1 à 3, dans lequel l'organe de retenue (60) comprend :
- un rebord annulaire (67) logé radialement entre le disque d'extrémité (10) et le premier anneau d'arrêt axial (15), et/ou
- des pattes de retenue (68) logées radialement entre le disque d'extrémité (10) et le premier anneau d'arrêt axial (15),
le rebord annulaire (67) et/ou les pattes de retenue (68) étant de préférence logé(es) à l'intérieur du logement (115, 115').

5. Embrayage (E1) selon l'une des revendications 1 à 4, dans lequel l'organe de retenue (60) comprend une partie centrale annulaire (61) et une partie périphérique annulaire (62) adaptée pour retenir le premier anneau d'arrêt axial (15), l'organe de retenue (60) comprenant une pluralité de bras de liaison (63) reliant la partie centrale annulaire (61) à la partie périphérique annulaire (62).

6. Embrayage (E1) selon l'une des revendications 1 à 4, dans lequel l'organe de retenue (60) est maintenu axialement par un composant (10, 13) de l'embrayage (E1), ledit composant (10, 13) étant choisi par exemple parmi le porte-disques (13) d'embrayage (E1) ou le disque d'extrémité (10) du premier groupe (10a, 10b) de disques.

7. Embrayage (E1) selon la revendication 6, dans lequel l'organe de retenue (60) est déformé élastiquement pour être maintenu axialement par rapport audit composant (10, 13).

8. Mécanisme (1) d'embrayage, comprenant un premier embrayage (E1) selon l'une quelconque des revendications 1 à 5, et un deuxième embrayage (E2) de type multidisques, ledit deuxième embrayage (E2) comprenant :
- un porte-disques (23) d'embrayage (E2),
- un deuxième groupe de disques (20a, 20b) supporté en partie par le porte-disques (23) d'embrayage (E2) et comportant un disque d'extrémité (20),
- un deuxième anneau d'arrêt axial (25) du disque d'extrémité (20), inséré en partie dans une deuxième gorge (235) formée dans le porte-disques (23) d'embrayage (E2), dans lequel l'organe de retenue (60) du premier anneau d'arrêt axial (15) est retenu axialement par le deuxième anneau d'arrêt axial (25).

9. Mécanisme (1) d'embrayage selon la revendication 8, dans lequel l'organe de retenue (60) du premier anneau d'arrêt axial (15) est intercalé entre le deuxième anneau d'arrêt axial (25) et le disque d'extrémité (20) du deuxième groupe de disques.

10. Mécanisme (1) d'embrayage selon l'une quelconque des revendications 8 à 9, dans lequel la partie périphérique annulaire (62) est localisée au niveau du premier embrayage (E1) et la partie centrale annulaire (61) est localisée au niveau du deuxième embrayage (E2).

11. Mécanisme (1) d'embrayage selon l'une quelconque des revendications 8 à 10, dans lequel le porte-disques (23) du deuxième embrayage (E2) comprend une portion cannelée (230) agencée pour entrainer en rotation une partie du deuxième groupe de disques (20a), la deuxième gorge (235) étant formée sur la portion cannelée (230), la deuxième gorge (235) étant formée sur le diamètre intérieur (D2) de ladite portion cannelée (230).

12. Mécanisme (1) d'embrayage selon la revendication 11, dans lequel la portion cannelée (130) du premier embrayage (E1) comprend un profil complémentaire avec la portion cannelée (230) du deuxième embrayage (E2).

13. Mécanisme (1) d'embrayage selon l'une quelconque des revendications 8 à 12, dans lequel le porte-disques (13) du premier embrayage (E1) et le porte-disques (23) du deuxième embrayage (E2) forment un porte-disques d'entrée de couple commun, réalisé d'un seul tenant.

14. écanisme (1) d'embrayage selon l'une quelconque des revendications 8 à 12, dans lequel le porte-disques (13) du premier embrayage (E1) et le porte-disques (23) du deuxième embrayage (E2) forment un porte-disques d'entrée de couple commun, rapportés l'un sur l'autre, reliés ensemble par exemple par une soudure.

15. Procédé d'assemblage d'un premier embrayage (E1), comportant au moins les étapes suivantes :
a) fournir :
- un premier porte-disques (13) comprenant une première gorge (135),
- un premier groupe (10a, 10b) de disques dont un disque d'extrémité (10) comprend un logement (115) annulaire délimité par un diamètre extérieur (D) radialement variable (ΔD), ledit logement (115) annulaire comprenant une zone (116A) de plus grand diamètre (Da) et une zone (116B) de plus petit diamètre (Db),
- un premier anneau d'arrêt axial (15),
b) insérer le premier groupe (10a, 10b) de disques sur le premier porte-disques (13) en finissant par un disque d'extrémité (10) lié en rotation avec le premier porte-disques (13),
c) élargir élastiquement le premier anneau d'arrêt axial (15) puis l'insérer à l'intérieur du logement (115) annulaire dans la zone (116A) de plus grand diamètre (Da),
d) relâcher élastiquement le premier anneau d'arrêt axial (15) pour qu'il se loge dans la première gorge (135) du premier porte-disques (13), et
e) faire pivoter le premier anneau d'arrêt axial (15) pour le positionner dans la zone (116B) de plus petit diamètre (Db) du logement (115) annulaire.

## Patentansprüche

1. Mehrscheibenkupplung (E1) für Kupplungsmechanismus (1), umfassend:
- einen Kupplungsscheibenträger (13),
- eine erste Scheibengruppe (10a, 10b), die teilweise vom Kupplungsscheibenträger (13) getragen wird und eine Endscheibe (10) aufweist,
- einen ersten Axialsicherungsring (15), der teilweise in eine erste Rille (135) eingesetzt ist, die im Scheibenträger (13) der Kupplung (E1) ausgebildet ist, und
- ein Organ zum Zurückhalten (60) des ersten Axialsicherungsrings (15), wobei die Endscheibe (10) eine Aufnahme (115, 115') umfasst, innerhalb welcher ein Abschnitt des Rückhalteorgans (60) aufgenommen ist, wobei sich das Rückhalteorgan (60) teilweise zwischen dem ersten Axialsicherungsring (15) und der ringförmigen Aufnahme (115, 115') der Endscheibe (10) befindet.

2. Kupplung (E1) nach Anspruch 1, wobei der erste Axialsicherungsring (15) innerhalb der Aufnahme (115) der Endscheibe (10) aufgenommen ist, wobei die Aufnahme (115) vorzugsweise ringförmig ist.

3. Kupplung (E1) nach Anspruch 1 oder 2, wobei der Scheibenträger (13) der Kupplung (E1) einen geriffelten Teilbereich (130) umfasst, der dafür angeordnet ist, einen Teil der ersten Scheibengruppe (10a) in Drehung zu versetzen, wobei die erste Rille (135) auf dem Außendurchmesser (D1) des geriffelten Abschnitts (130) ausgebildet ist.

4. Kupplung (E1) nach einem der Ansprüche 1 bis 3, wobei das Rückhalteorgan (60) Folgendes umfasst:
- einen ringförmigen Rand (67), der radial zwischen der Endscheibe (10) und dem ersten Axialsicherungsring (15) aufgenommen ist, und/oder
- Rückhaltelaschen (68), die radial zwischen der Endscheibe (10) und dem ersten Axialsicherungsring (15) aufgenommen sind,
wobei der ringförmige Rand (67) und/oder die Rückhaltelaschen (68) vorzugsweise innerhalb der Aufnahme (115, 115') aufgenommen ist bzw. sind.

5. Kupplung (E1) nach einem der Ansprüche 1 bis 4, wobei das Rückhalteorgan (60) einen ringförmigen Mittelabschnitt (61) und einen ringförmigen Peripherieabschnitt (62), der geeignet ist, den ersten Axialsicherungsring (15) zurückzuhalten, umfasst, wobei das Rückhalteorgan (60) eine Mehrzahl von Verbindungsarmen (63) umfasst, die den ringförmigen Mittelabschnitt (61) mit dem ringförmigen Peripherieabschnitt (62) verbinden.

6. Kupplung (E1) nach einem der Ansprüche 1 bis 4, wobei das Rückhalteorgan (60) axial von einer Komponente (10, 13) der Kupplung (E1) gehalten wird, wobei die Komponente (10, 13) zum Beispiel aus dem Scheibenträger (13) der Kupplung (E1) oder der Endscheibe (10) der ersten Scheibengruppe (10a, 10b) gewählt ist.

7. Kupplung (E1) nach Anspruch 6, wobei das Rückhalteorgan (60) elastisch verformt ist, um axial bezogen auf die Komponente (10, 13) gehalten zu werden.

8. Kupplungsmechanismus (1), umfassend eine erste Kupplung (E1) nach einem der Ansprüche 1 bis 5 und eine zweite Mehrscheibenkupplung (E2), wobei die zweite Kupplung (E2) Folgendes umfasst:
- einen Scheibenträger (23) der Kupplung (E2),
- eine zweite Scheibengruppe (20a, 20b), die teilweise vom Scheibenträger (23) der Kupplung (E2) getragen wird und eine Endscheibe (20) aufweist,
- einen zweiten Ring zur Axialsicherung (25) der Endscheibe (20), der teilweise in eine zweite Rille (235) eingesetzt ist, die im Scheibenträger (23) der Kupplung (E2) ausgebildet ist, wobei das Organ zum Zurückhalten (60) des ersten Axialsicherungsrings (15) vom zweiten Axialsicherungsring (25) axial zurückgehalten wird.

9. Kupplungsmechanismus (1) nach Anspruch 8, wobei das Organ zum Zurückhalten (60) des ersten Axialsicherungsrings (15) zwischen dem zweiten Axialsicherungsring (25) und der Endscheibe (20) der zweiten Scheibengruppe eingefügt ist.

10. Kupplungsmechanismus (1) nach einem der Ansprüche 8 bis 9, wobei sich der ringförmige Peripherieabschnitt (62) an der ersten Kupplung (E1) und sich der ringförmige Mittelabschnitt (61) an der zweiten Kupplung (E2) befindet.

11. Kupplungsmechanismus (1) nach einem der Ansprüche 8 bis 10, wobei der Scheibenträger (23) der zweiten Kupplung (E2) einen geriffelten Abschnitt (230) umfasst, der dafür angeordnet ist, einen Teil der zweiten Scheibengruppe (20a) in Drehung zu versetzen, wobei die zweite Rille (235) auf dem geriffelten Abschnitt (230) ausgebildet ist, wobei die zweite Rille (235) auf dem Innendurchmesser (D2) des geriffelten Abschnitts (230) ausgebildet ist.

12. Kupplungsmechanismus (1) nach Anspruch 11, wobei der geriffelte Abschnitt (130) der ersten Kupplung (E1) ein Zusatzprofil mit dem geriffelten Abschnitt (230) der zweiten Kupplung (E2) umfasst.

13. Kupplungsmechanismus (1) nach einem der Ansprüche 8 bis 12, wobei der Scheibenträger (13) der ersten Kupplung (E1) und der Scheibenträger (23) der zweiten Kupplung (E2) einen gemeinsamen Drehmoment-Eingangsscheibenträger bilden, der einstückig ausgebildet ist.

14. Kupplungsmechanismus (1) nach einem der Ansprüche 8 bis 12, wobei der Scheibenträger (13) der ersten Kupplung (E1) und der Scheibenträger (23) der zweiten Kupplung (E2) einen gemeinsamen Drehmoment-Eingangsscheibenträger bilden, die aneinander angesetzt sind, die zum Beispiel durch eine Schweißung zusammen verbunden sind.

15. Verfahren zum Zusammenbau einer ersten Kupplung (E1), das wenigstens die folgenden Schritte aufweist:
a) Bereitstellen:
- eines ersten Scheibenträgers (13), der eine erste Rille (135) umfasst,
- einer ersten Scheibengruppe (10a, 10b), von der eine Endscheibe (10) eine ringförmige Aufnahme (115) umfasst, die von einem Außendurchmesser (D) begrenzt ist, der radial variabel (ΔD) ist, wobei die ringförmige Aufnahme (115) einen Bereich (116A) größeren Durchmessers (Da) und einen Bereich (116B) kleineren Durchmessers (Db) umfasst,
- eines ersten Axialsicherungsrings (15),
b) Einsetzen der ersten Scheibengruppe (10a, 10b) auf den ersten Scheibenträger (13), wobei zuletzt eine Endscheibe (10) eingesetzt wird, die drehfest mit dem ersten Scheibenträger (13) verbunden ist,
c) elastisches Aufweiten des ersten Axialsicherungsrings (15), dann Einsetzen desselben in die ringförmige Aufnahme (115) im Bereich (116B) größeren Durchmessers (Da),
d) elastisches Entspannen des ersten Axialsicherungsrings (15), damit er sich in die erste Rille (135) des ersten Scheibenträgers (13) einfügt, und
e) Schwenken des ersten Axialsicherungsrings (15), um ihn im Bereich (116B) kleineren Durchmessers (Db) der ringförmigen Aufnahme (115) zu positionieren.

## Claims

1. Multi-disc clutch (E1) for a clutch mechanism (1), comprising:
- a clutch disc carrier (13),
- a first group of discs (10a, 10b) partially supported by the clutch disc carrier (13) and including an end disc (10),
- a first axial locking ring (15) partially inserted into a first groove (135) formed in the clutch (E1) disc carrier (13), and
- a member (60) for retaining the first axial locking ring (15), said end disc (10) comprising a recess (115, 115') inside which part of the retaining member (60) is accommodated, the retaining member (60) being situated partially between the first axial locking ring (15) and the annular recess (115, 115') in the end disc (10).

2. Clutch (E1) according to Claim 1, in which said first axial locking ring (15) is accommodated inside the recess (115) in the end disc (10), the recess (115) preferably being annular.

3. Clutch (E1) according to Claim 1 or 2, in which the clutch (E1) disc carrier (13) comprises a splined portion (130) arranged to rotate part of the first group of discs (10a), the first groove (135) being formed in the outer diameter (D1) of the splined portion (130).

4. Clutch (E1) according to one of Claims 1 to 3, in which the retaining member (60) comprises:
- an annular rim (67) accommodated radially between the end disc (10) and the first axial locking ring (15), and/or
- retaining lugs (68) accommodated radially between the end disc (10) and the first axial locking ring (15),
the annular rim (67) and/or the retaining lugs (68) being preferably accommodated inside the recess (115, 115').

5. Clutch (E1) according to one of Claims 1 to 4, in which the retaining member (60) comprises an annular central part (61) and an annular peripheral part (62) capable of retaining the first axial locking ring (15), the retaining member (60) comprising a plurality of connecting arms (63) connecting the annular central portion (61) to the annular peripheral portion (62) .

6. Clutch (E1) according to one of Claims 1 to 4, in which the retaining member (60) is axially held by a component (10, 13) of the clutch (E1), said component (10, 13) being selected for example from the clutch (E1) disc carrier (13) or the end disc (10) of the first group (10a, 10b) of discs.

7. Clutch (E1) according to Claim 6, in which the retaining member (60) is elastically deformed in order to be held axially relative to said component (10, 13).

8. Clutch mechanism (1), comprising a first clutch (E1) according to any one of Claims 1 to 5, and a second multi-disc clutch (E2), said second clutch (E2) comprising:
- a clutch (E2) disc carrier (23),
- a second group of discs (20a, 20b) partially supported by the clutch (E2) disc carrier (23) and including an end disc (20),
- a second axial locking ring (25) of the end disc (20), partially inserted into a second groove (235) formed in the clutch (E2) disc carrier (23), in which the retaining member (60) of the first axial locking ring (15) is axially retained by the second axial locking ring (25).

9. Clutch mechanism (1) according to Claim 8, in which the retaining member (60) of the first axial locking ring (15) is inserted between the second axial locking ring (25) and the end disc (20) of the second group of discs.

10. Clutch mechanism (1) according to either one of Claims 8 and 9, in which the annular peripheral part (62) is located in line with the first clutch (E1) and the annular central part (61) is located in line with the second clutch (E2).

11. Clutch mechanism (1) according to any one of Claims 8 to 10, in which the clutch (E2) disc carrier (23) comprises a splined portion (230) arranged to rotate part of the second group of discs (20a), the second groove (235) being formed in the splined portion (230), the second groove (235) being formed in the inner diameter (D2) of said splined portion (230) .

12. Clutch mechanism (1) according to Claim 11, in which the splined portion (130) of the first clutch (E1) comprises a profile that complements the splined portion (230) of the second clutch (E2).

13. Clutch mechanism (1) according to any one of Claims 8 to 12, in which the disc carrier (13) of the first clutch (E1) and the disc carrier (23) of the second clutch (E2) form a common torque input disc carrier, made in one piece.

14. Clutch mechanism (1) according to any one of Claims 8 to 12, in which the disc carrier (13) of the first clutch (E1) and the disc carrier (23) of the second clutch (E2) form a common torque input disc carrier, attached to each other, connected together for example by welding.

15. Method for assembling a first clutch (E1), including at least the following steps:
a) providing:
- a first disc carrier (13) comprising a first groove (135),
- a first group (10a, 10b) of discs an end disc (10) of which comprises an annular recess (115) delimited by a radially variable (ΔD) outer diameter (D), said annular recess (115) comprising a largest-diameter (Da) zone (116A) and a smallest-diameter (Db) zone (116B),
- a first axial locking ring (15),
b) inserting the first group (10a, 10b) of discs into the first disc carrier (13), finishing with an end disc (10) rotatably linked to the first disc carrier (13),
c) elastically expanding the first axial locking ring (15) and then inserting it inside the annular recess (115) in the largest-diameter (Da) zone (116A),
d) elastically releasing the first axial locking ring (15) so that it is accommodated in the first groove (135) in the first disc carrier (13), and
e) pivoting the first axial locking ring (15) in order to position it in the smallest-diameter (Db) zone (116B) of the annular recess (115).
